(19) **Europäisches Patentamt**
**European Patent Office**
**Office européen des brevets**

(11) **EP 2 058 779 A1**

(12) **EUROPEAN PATENT APPLICATION**
published in accordance with Art. 153(4) EPC

(43) Date of publication:
**13.05.2009 Bulletin 2009/20**

(21) Application number: **07806186.8**

(22) Date of filing: **22.08.2007**

(51) Int Cl.:
**G09B 29/10** *(2006.01)*  **G06F 3/042** *(2006.01)*
**G06F 3/12** *(2006.01)*  **G09B 29/00** *(2006.01)*
**G09B 29/02** *(2006.01)*

(86) International application number:
**PCT/JP2007/066709**

(87) International publication number:
**WO 2008/032567 (20.03.2008 Gazette 2008/12)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.08.2006 JP 2006225896**

(71) Applicant: **YOSHIDA, Kenji**
**Bunkyo-ku**
**Tokyo 112-0002 (JP)**

(72) Inventor: **YOSHIDA, Kenji**
**Bunkyo-ku**
**Tokyo 112-0002 (JP)**

(74) Representative: **Browne, Robin Forsythe et al**
**Leaman Browne**
**5 South Parade**
**Leeds, Yorkshire LS1 5QX (GB)**

(54) **PRINT OUTPUT CONTROL MEANS**

(57)     when printing an electronic map displayed on a display device on a surface of a medium, a user-friendly medium and print output thereof can be realized by superimposing and printing a dot pattern signifying XY coordinate values and/or code values. The print output control unit displays on the display device information of an electronic map defined by latitude and longitude downloaded from a server via a network or read from a storage medium, converts the latitude and longitude which indicate a location in the information of the electronic map into XY coordinate values in accordance with a predetermined scale size, stores the latitude and longitude and the XY coordinate values by correlating the same in a storage unit, and superimposes and prints a dot pattern where the XY coordinate values are patterned as a dot code, according to the scale size, on a medium on which the electronic map is printed.

FIG. 1

MAP
ICON PORTION
HIGHLIGHT MAP
ICON PORTION
MAP PORTION

**Description**

[Technical Field]

The present invention relates to a medium having printed thereon dot patterns and a print output control unit thereof.

[Background Art]

There is known a map, serving as a medium, on which an identifier, such as a barcode, is provided. In a car navigation device, positional data, such as latitude or longitude, is recorded in the identifier on the map. Then, if the identifier is read by a reading unit, it is registered as a destination by the car navigation device. On a display of the car navigation device, a present location, direction and distance to a destination, and the like are displayed (for example, see JPA-H6-103498)

Further, there is suggested an information display method that stores information corresponding to the identifier on the map in a memory of a computer, a memory card, or the like and, if the identifier is read by a reading unit, displays the information corresponding to the identifier on an electronic apparatus, such as a computer or a cellular phone. For example, barcodes are printed at tourist attractions on the map and, if a barcode is read, the explanation on a tourist destination is displayed as a video (for example, see JPA-2004-54465).

Patent Document 1: JPA-H6-103498

Patent Document 2: JPA-2004-54465

[Disclosure of the Invention]

[Problem that the Invention is to solve]

However, in JPA-H6-103498, there is a problem flexibility is lacking since it may be impossible to enlarge or reduce the map displayed on the display of the car navigation device or to simply display a place to be displayed other than the present location.

Further, in JPA-2004-54465, there is a problem the information obtained from the identifier is limited to the explanation of facilities or the like. That is, it may be impossible to obtain desired information about the map, such as roads around the facilities or the like.

The invention has been finalized in consideration of the above problems, and it is an object of the invention to realize a user-friendly medium, information output thereof, and printing of such medium by defining a plurality of information in the same region of a dot pattern printed on a surface of a medium, such as a map or the like, and selectively outputting the information through an imaging operation, etc. of an imaging unit.

[Means for Solving the Problem]

The invention has employed the following means.

According to a first aspect of the invention, there is provided a print output control unit configured to display on a display device information of an electronic map defined by latitude and longitude downloaded from a server via a network or read from a storage medium, convert the latitude and longitude which indicate a location in the information of the electronic map into XY coordinate values in accordance with a predetermined scale size, store the latitude and longitude and the XY coordinate values by correlating the same in a storage unit, and superimpose and print a dot pattern where the XY coordinate values are patterned as a dot code, according to the scale size, on a medium on which the electronic map is printed.

According to a second aspect of the invention, there is provided a print output unit according to the first aspect, wherein, in a region other than a map region on which the dot pattern where the XY coordinate values are patterned as the dot code is superimposed and printed, a map number region on which a dot pattern where latitude and longitude information correlated with XY coordinates of the map region is patterned as a dot code is printed is printed.

According to a third aspect of the invention, there is provided a print output control unit according to the first or second aspect, wherein the latitude and longitude at a center of map information are printed as a dot pattern in the map number region.

According to a forth aspect of the invention, there is provided a print output control unit according to any one of the first to third aspects, wherein the map also has scale size information printed as a dot pattern.

According to a fifth aspect of the invention, there is provided a print output control unit according to the first aspect, further configured to store latitude and longitude of a center of the electronic map and the scale size as a dot code in the storage unit in order to display on a display the information of the electronic map from a captured image downloaded from the server via the network or read from the storage unit, and superimpose and print the dot pattern where the dot code is repeatedly patterned on a map icon printed on a surface of the medium in order to guide an imaging by the imaging unit.

According to a sixth aspect of the invention, there is provided a print output control unit according to any one of the first to fifth aspects, further configured to store an address where feature information existing as a symbol of the information of the electrical map is registered in relation with latitude and longitude which indicate a location of the address in the storage unit, store a code which identifies the symbol from a captured image or a feature information code defined by the longitude and latitude as a dot code in the storage unit, and superimpose and print a dot pattern where the dot code as well as the XY coordinate values are repeatedly patterned on the symbol of the information of the electrical map to be printed.

According to a seventh aspect of the invention, there is provided a print output control unit according to any one of the first to fifth aspects, further configured to store an address where attribute information of a divided region of the electronic map is registered, in relation with an attribute code, which indicates an attribute of the address, and latitude and longitude, which indicate a location of a representative point within the divided region, in the storage unit, store a code which identifies the divided region from a captured image or the attribute code defined by the latitude and longitude as a dot code in the storage unit, and superimpose and print a dot pattern where the dot code as well as the XY coordinate values are repeatedly patterned within the divided region of the electronic map to be printed.

According to an eighth aspect of the invention, there is provided a print output control unit according to the seventh aspect, wherein the location of the representative point within the divided region is latitude and longitude calculated from a centroid of the divided region.

According to a ninth aspect of the invention, there is provided a print output control unit according to any one of the first to eighth aspects, wherein different and identifiable inks are used for ink for printing the electronic map and for ink for printing the dot pattern.

According to a tenth aspect of the invention, there is provided a print output control unit according to the ninth aspect, wherein the different and identifiable inks are at least two inks that have different frequency characteristics to identify the dot pattern from other printings.

According to an eleventh aspect of the invention, there is provided a print output control unit according to the ninth aspect, wherein the different and identifiable inks are ink that absorbs light at an arbitral frequency and ink that reflects the light at an arbitral frequency to identify the dot pattern from other printings.

According to a twelfth aspect of the invention, there is provided a print output control unit according to the ninth aspect, wherein at least one of the different and identifiable inks is invisible ink and has light absorption characteristics to identify the dot pattern from other printings.

[Advantage of the Invention]

According to the aspects of the invention, it is possible to superimpose and print a dot pattern signifying XY coordinates and/or a code value when printing, on a surface of a medium, an electronic map displayed on a display device, thereby realizing a user-friendly medium and print output thereof.

[Brief Description of the Drawings]

Fig. 1 is a front view of a planar map of an embodiment of the invention.
Fig. 2 is an explanatory view showing a utilization state of a map.
Fig. 3 is a block diagram showing the system configuration of a scanner and a computer that are used in connection with a map.
Fig. 4 is an explanatory view showing an example of a dot pattern.
Fig. 5 is an enlarged view showing an example of an information dot of a dot pattern.
Figs. 6A and 6B are explanatory views showing the arrangement of information dots.
Fig. 7 is a diagram showing an example of an information dot and bit display of data defined therein, and shows another embodiment.
Figs. 8A to 8C show examples of an information dot and bit display of data defined therein, and specifically, Fig. A shows a case where two dots are disposed, Fig. 8B shows a case where four dots are disposed, and Fig. 8C shows a case where five dots are disposed.

Figs. 9A to 9D show modifications of a dot pattern, and specifically, Fig. 9A is a schematic view showing a case where six information dots are disposed, Fig. 9B is a schematic view showing a case where nine information dots are disposed, Fig. 9C is a schematic view showing a case where 12 information dots are disposed, and Fig. 9D is a schematic view showing a case where 36 information dots are disposed.

Figs. 10A and 10B are diagrams illustrating a format of a dot pattern in a planar map, and specifically, Fig. 10A is an explanatory view showing values defined by individual dots in a table, and Fig. 10B is an explanatory view showing the arrangement of individual dots.

Figs. 11A and 11B are diagrams illustrating an operation that enlarges or reduces a map displayed on a display device (monitor) by clicking an icon portion, and specifically, Fig. 11A is a diagram showing a user's operation, and Fig. 11B is a diagram illustrating a screen on the display (monitor) in Fig. 11A.

Figs. 12A and 12B are diagrams illustrating an operation that scrolls a map on a display (monitor) by clicking an icon portion, and specifically, Fig. 12A is a diagram showing a user's operation, and Fig. 12B is a diagram illustrating a screen on the display (monitor) in Fig. 12A.

Figs. 13A and 13B are diagrams illustrating an operation that scrolls a map on a display (monitor) by clicking a road in a map portion, and specifically, Fig. 13A is a diagram showing a user's operation, and Fig. 13B is a diagram illustrating a screen on the display (monitor) in Fig. 13A.

Figs. 14A and 14B are diagrams illustrating an operation that scrolls a map on a display (monitor) by moving the scanner in a state where the scanner is in contact with the map portion,

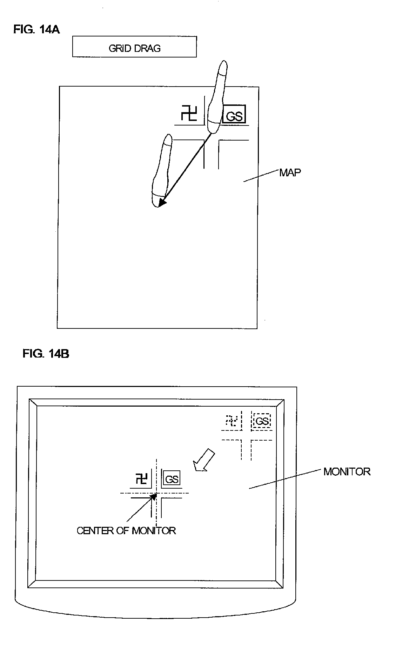

Fig. 14A is a diagram showing a user's operation, and Fig. 14B is a diagram illustrating a screen on the display (monitor) in Fig. 14A.

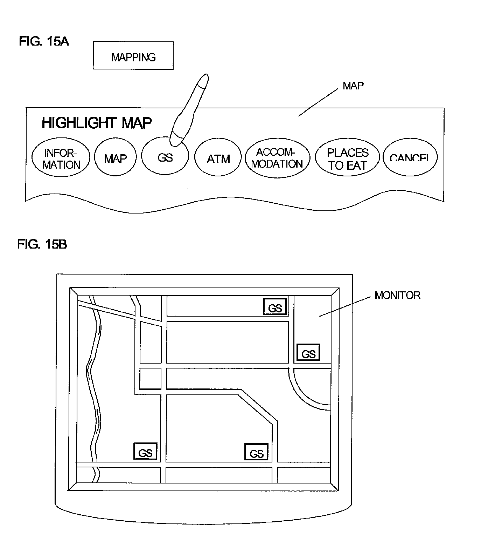

Figs. 15A and 15B are diagrams illustrating an operation that displays a symbol on a display (monitor) by clicking an icon portion, and specifically, Fig. 15A is a diagram showing a user's operation, and Fig. 15B is a diagram illustrating a screen on the display (monitor) in Fig. 15A.

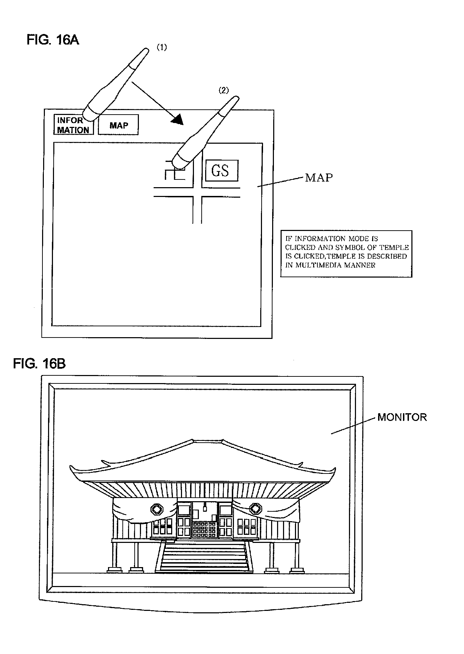

Figs. 16A and 16B are diagrams illustrating an information mode, and specifically, Fig. 16A is a diagram showing a user's operation, and Fig. 16B is a diagram illustrating a screen on the display (monitor) in Fig. 16A.

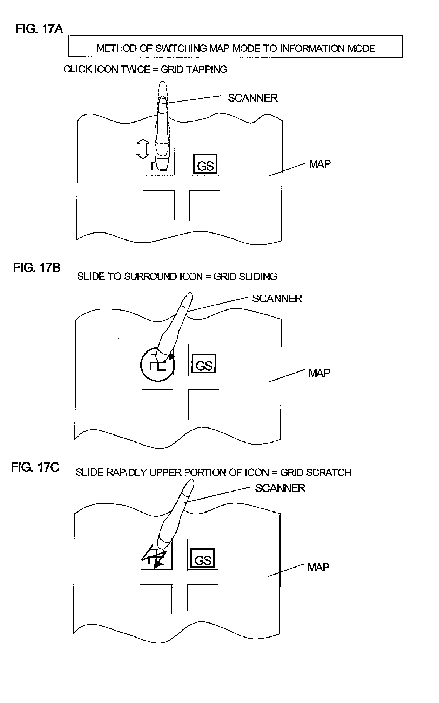

Figs. 17A to 17C are diagrams illustrating an operation that switches from a map mode to an information mode.

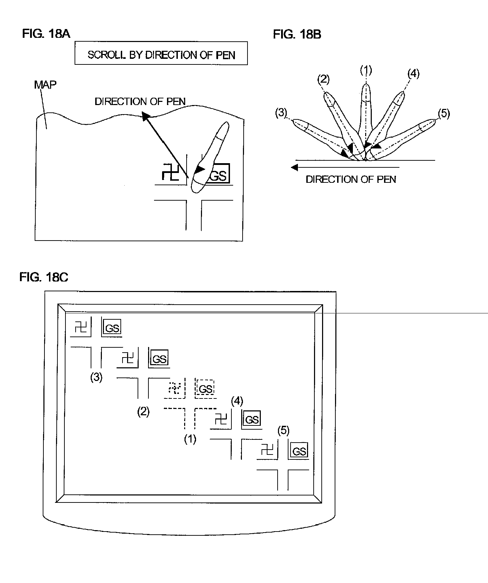

Figs. 18A to 18C are diagrams illustrating an operation that scrolls a map on a display (monitor) according to an orientation of a scanner, and specifically, Fig. 18A is a diagram showing a user's operation. Fig. 18B is a diagram illustrating a state where the scanner is inclined, and Fig. 18C is a diagram illustrating a screen on the display (monitor) in Fig. 18B.

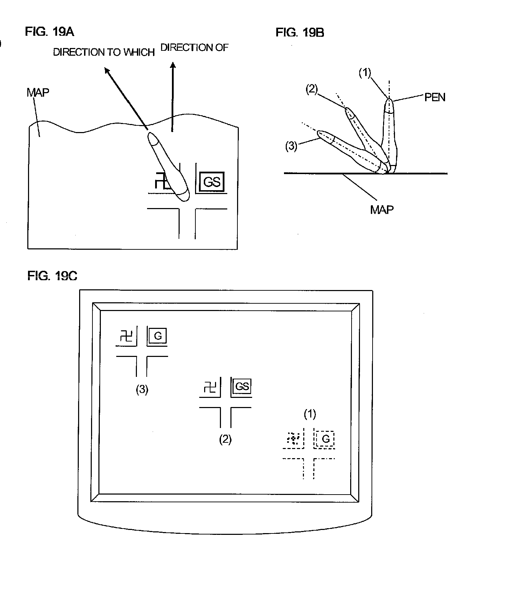

Figs. 19A to 19C are diagrams illustrating an operation that scrolls a map on a display (monitor) according to an inclination of a scanner, and specifically, Fig. 19A is a diagram showing a user's operation, Fig. 19B is a diagram illustrating a state where the scanner is inclined, and Fig. 19C is a diagram illustrating a screen on the display (monitor) in Fig. 19B.

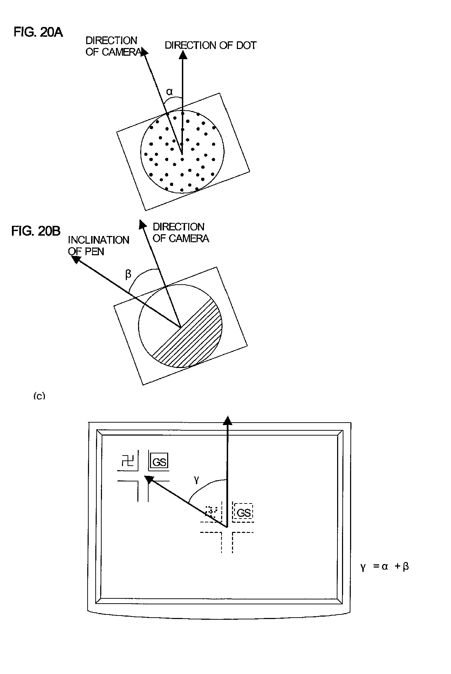

Figs. 20A to 20C are diagrams illustrating the relationship between an inclination and an orientation of a scanner and a scroll direction.

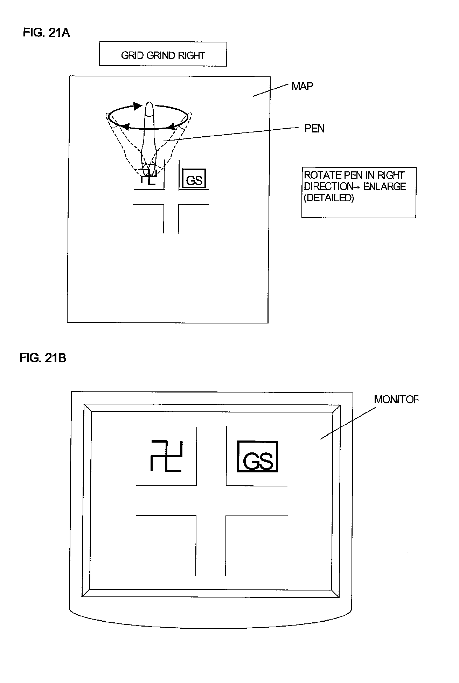

Figs. 21A and 21B are diagrams illustrating an operation that enlarges a map on a display (monitor) by rotating a scanner, and specifically, Fig. 21A is a diagram showing a user's operation, and Fig. 21B is a diagram illustrating a screen on the display (monitor) in Fig. 21A.

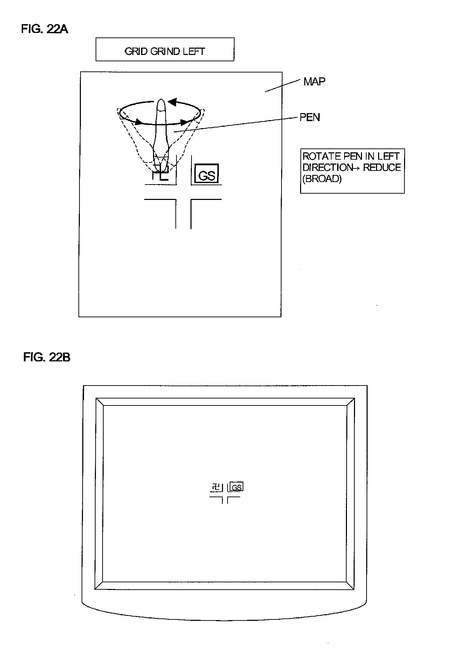

Figs. 22A and 22B are diagrams illustrating an operation that reduces a map on a display (monitor) by rotating a scanner, and specifically, Fig. 22A is a diagram showing a user's operation, and Fig. 22B is a diagram illustrating a screen on the display (monitor) in Fig. 22A.

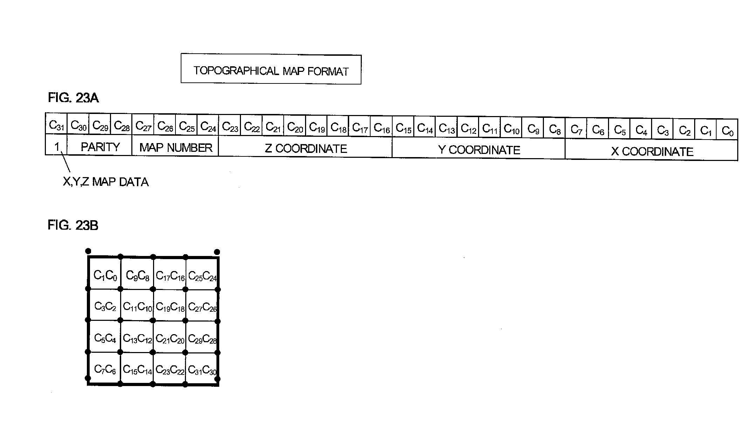

Figs. 23A and 23B are diagrams illustrating a format of a dot pattern in a three-dimensional map according to another embodiment of the invention, and specifically, Fig. 23A is an explanatory view showing values defined by individual dots in a table, and Fig. 23B is an explanatory view showing the ) arrangement of individual dots.

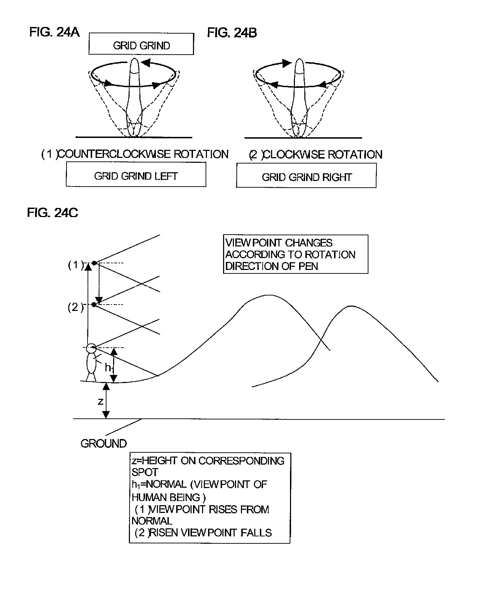

Figs. 24A to 24C are diagrams illustrating an operation that changes a view point by rotating a scanner in a three-dimensional map, and specifically, Figs. 24A and 24B are diagram showing a user's operation, and Fig. 24C is a diagram illustrating a screen on a display (monitor) in Figs. 24A and 24B.

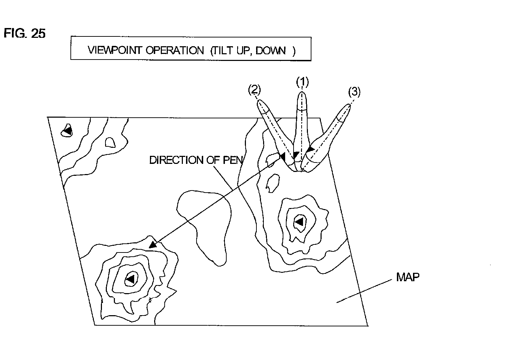

Fig. 25 is a diagram illustrating an operation that tilts up tilts down a view point and illustrating a user's operation.

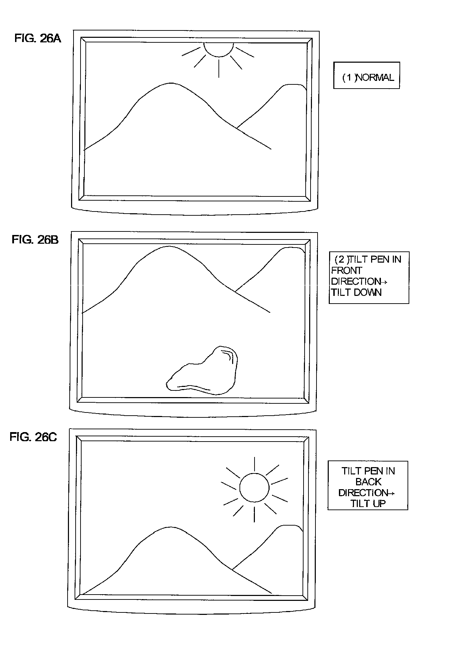

Figs. 26A to 26C are diagrams illustrating an operation that tilts up or tilts down a view point, and specifically, illustrating a screen displayed on a display (monitor) when each operation of Fig. 25 is performed.

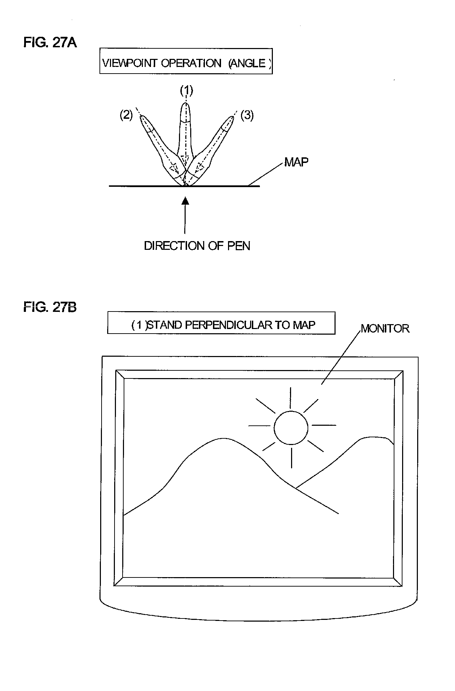

Figs. 27A and 27B are diagrams illustrating an operation that changes a view point left or right, and specifically, Fig. 27A is a diagram showing a user's operation, and Fig. 27B is a diagram illustrating a screen on a display (monitor) in Fig. 27A.

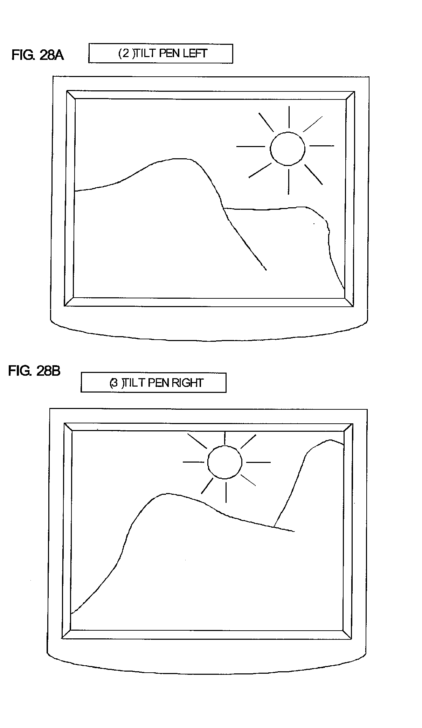

Figs. 28A and 28B are diagrams illustrating an operation that changes a view point left or right, and specifically, illustrating a screen on a display (monitor) in Figs. 27A and 27B.

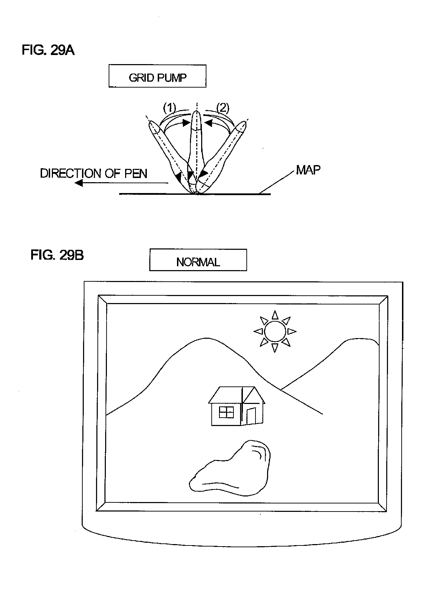

Figs. 29A and 29B are diagrams illustrating an operation that changes a mode of a screen on a display (monitor) by a grid pump operation, and specifically, Fig. 29A is a diagram ) showing a user's operation, and Fig. 29B is a diagram illustrating a screen on the display (monitor) in a normal mode.

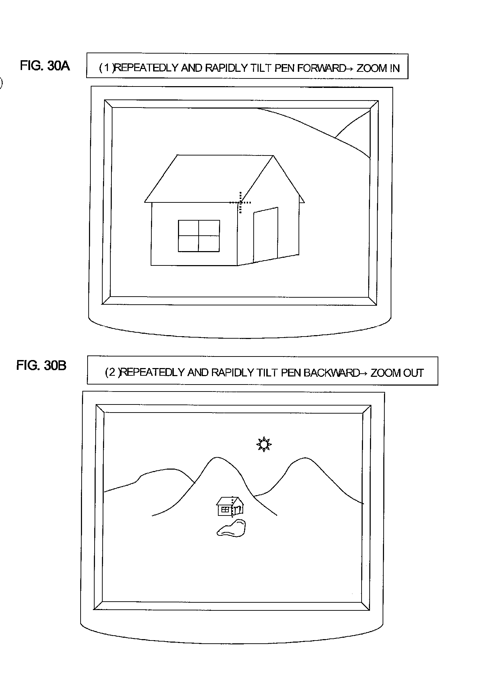

Figs. 30A and 30B are diagrams illustrating an operation that changes a mode of a screen on a display (monitor) by a grid pump operation, and specifically, Fig. 30A is a diagram illustrating a case where a mode is changed to a telephoto mode on the display (monitor), and Fig. 30B is a diagram illustrating a case where a mode is changed to a wide mode on the display (monitor).

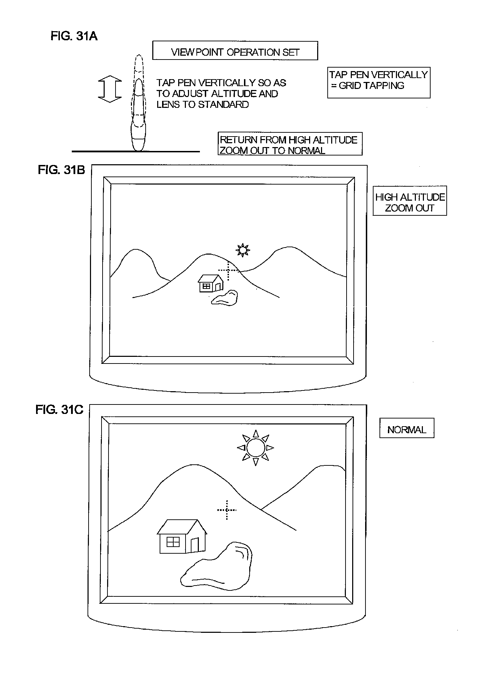

Figs. 31A to 31C are diagrams illustrating an operation that resets a view point to a normal mode by a grid tapping operation, and specifically, Fig. 31A is a diagram illustrating a user's operation, Fig. 31B is a diagram illustrating a screen on a display (monitor) before the operation, and Fig. 31C is a diagram illustrating a screen on the display (monitor) after the operation.

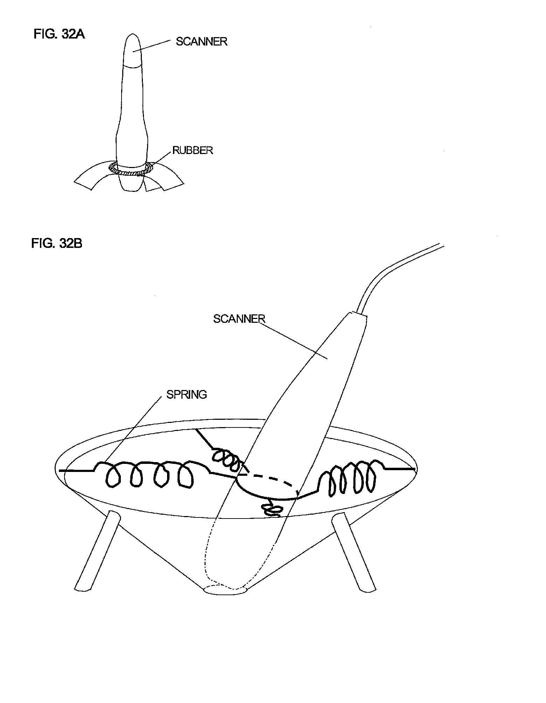

Figs. 32A and 32B are explanatory views showing another embodiment of a scanner that is used to perform various operations on a map.

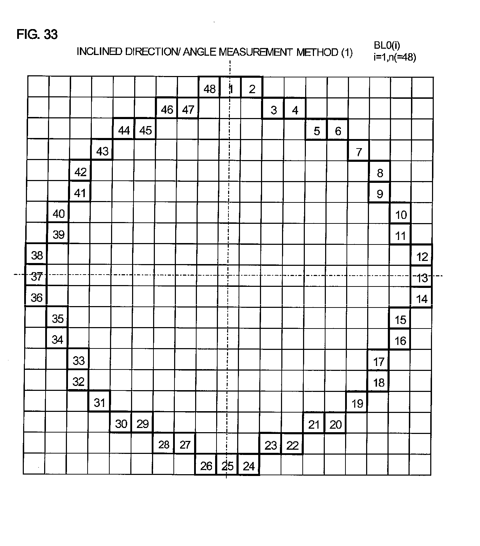

Fig. 33 is a diagram (1) illustrating a method of measuring inclination direction and angle when various operations are performed according to an inclination of a scanner.

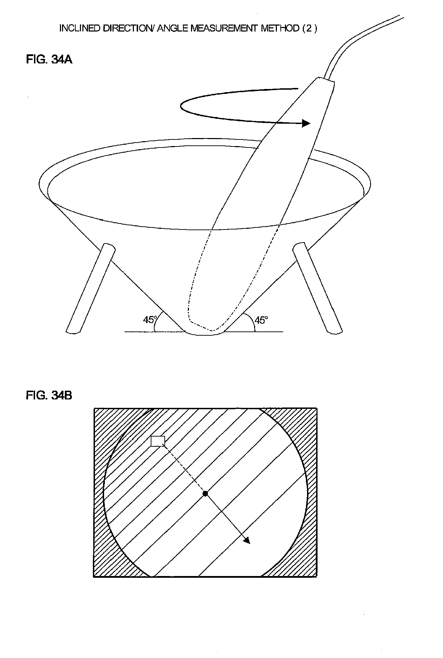

Figs. 34A and 34B are diagrams (2) illustrating a method of measuring inclination direction and angle when various operations are performed according to an inclination of a ) scanner.

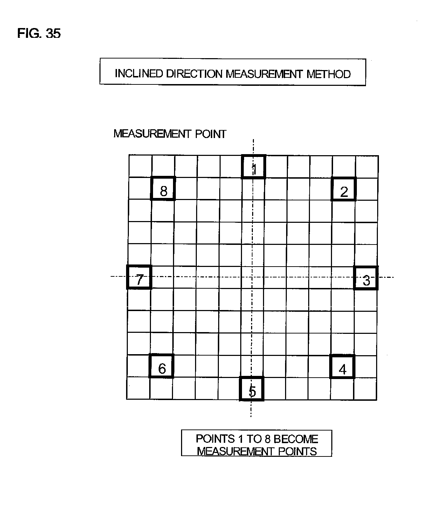

Fig. 35 is a diagram illustrating a method of measuring an inclination direction when various operations are performed according to an inclination of a scanner.

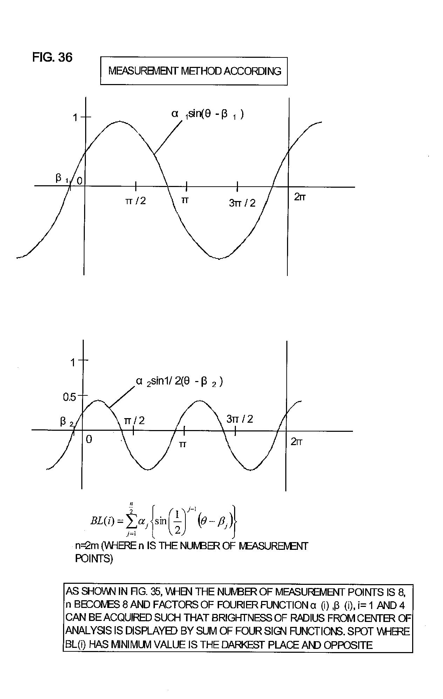

Fig. 36 is a diagram illustrating a method of measuring an inclination direction using a Fourier function when various operations are performed according to an inclination of a scanner.

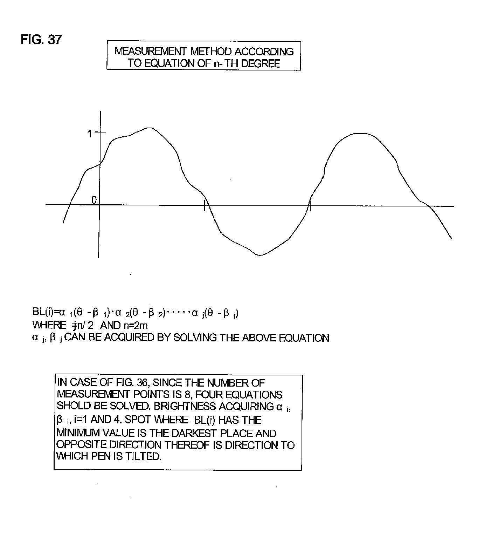

Fig. 37 is a diagram illustrating a method of measuring an inclination direction using an equation of n-th degree when various operations are performed according to an inclination of a scanner.

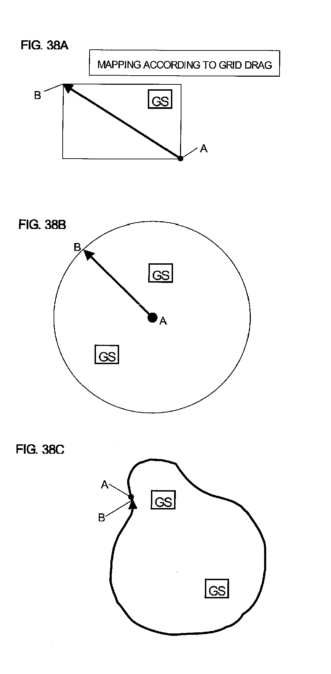

Figs. 38A to 38C are diagrams illustrating a function of designating a range by a grid drag operation and displaying a symbol on a display (monitor).

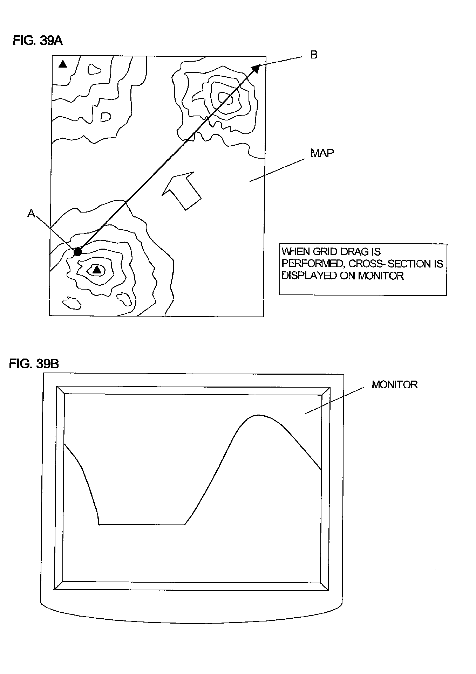

Figs. 39A and 39B are diagrams illustrating a function of displaying a cross-section on a display (monitor) by a grid drag operation.

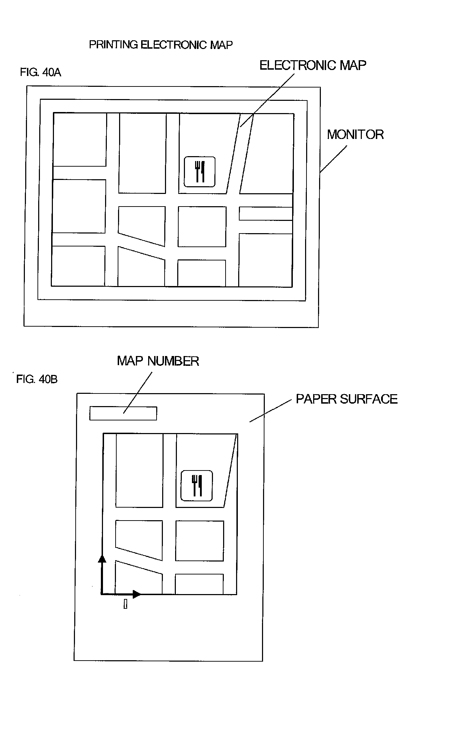

Figs. 40A and 40B are diagrams illustrating a printing of an electronic map.

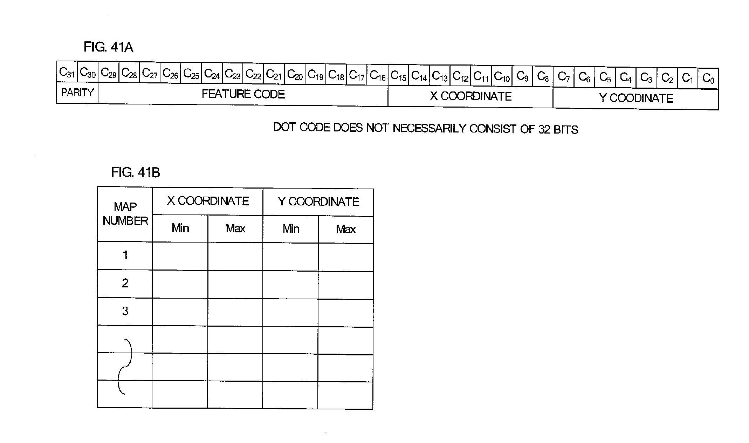

Figs. 41A and 41B are diagrams illustrating a correspondence between a dot code format of a printed map, and a map number and XY coordinates.

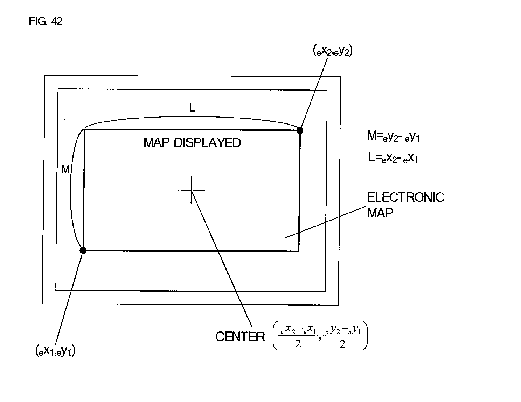

Fig. 42 is a diagram (1) illustrating a scale size when an electronic map is printed.

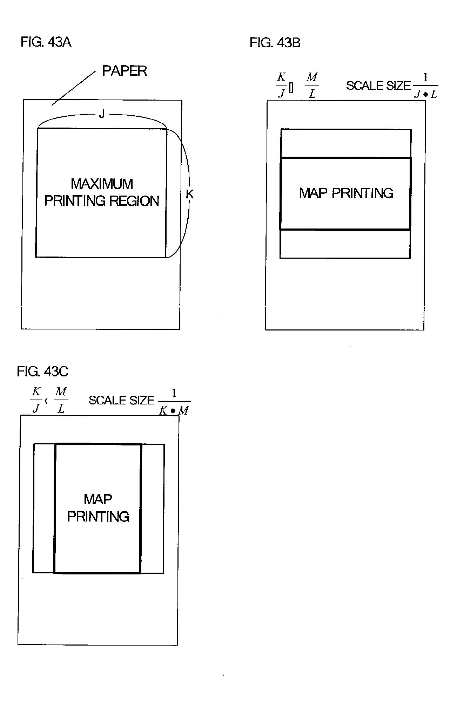

Figs. 43A to 43C are diagrams (2) illustrating a scale size when an electronic map is printed.

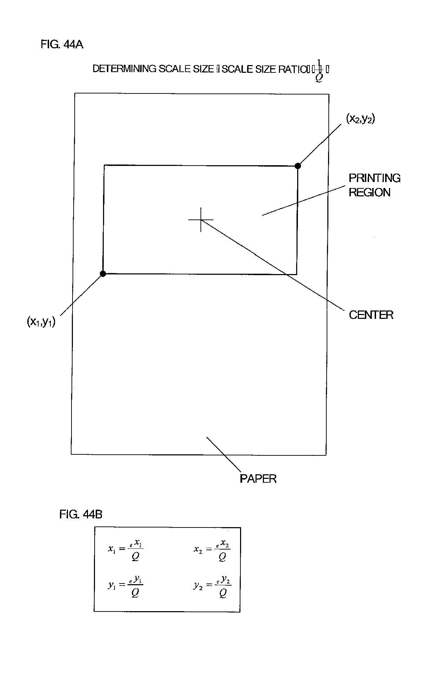

Figs. 44A and 44B are diagrams (3) illustrating a scale size when an electronic map is printed.

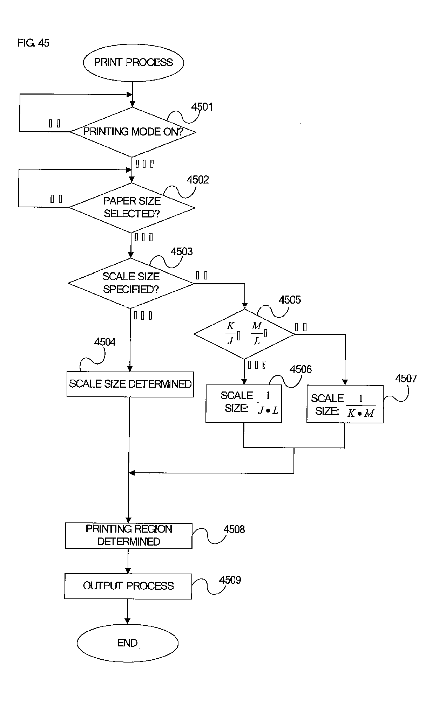

Fig. 45 is a flowchart illustrating a printing process.

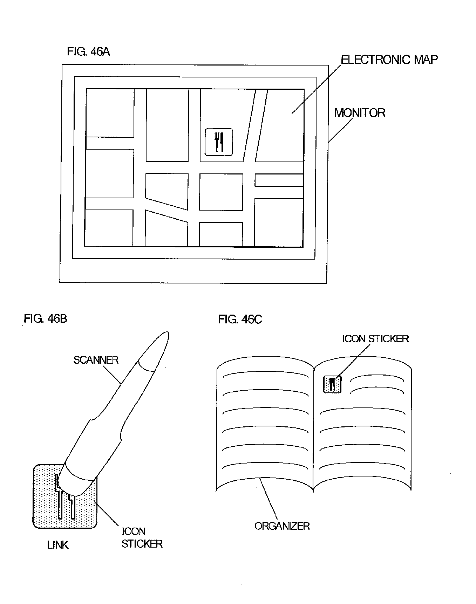

Figs. 46A to 46C are diagrams (1) illustrating a link between an icon on an electronic map and an icon sticker.

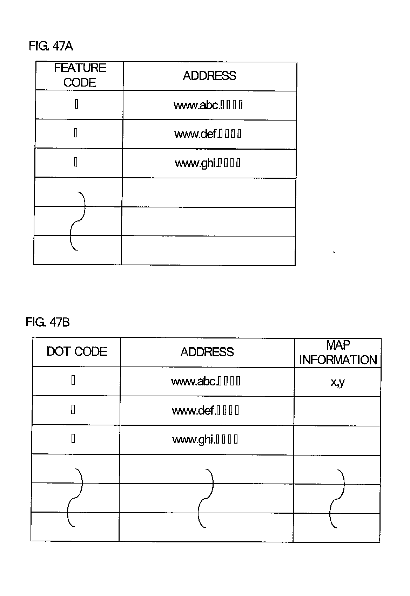

Figs. 47A and 47B are diagrams (2) illustrating a link between an icon on an electronic map and an icon sticker.

Figs. 40A to 48E are diagrams (3) illustrating a link between an icon on an electronic map and an icon sticker.

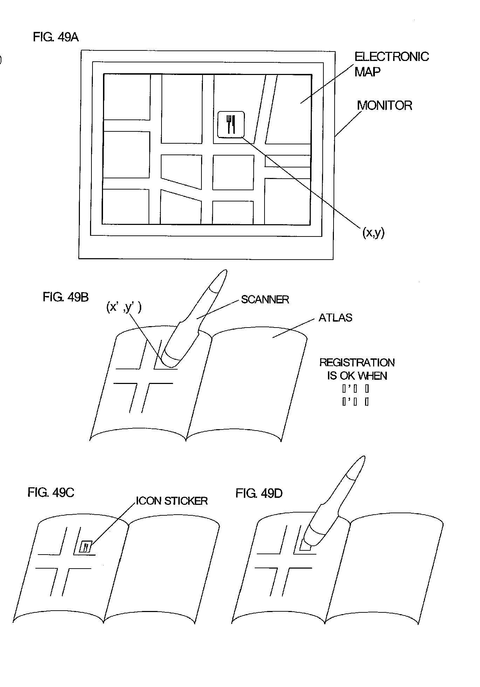

Figs. 49A to 49D are diagrams illustrating an embodiment correlating an electronic map to an atlas in which dot patterns are superimposed and printed and using them.

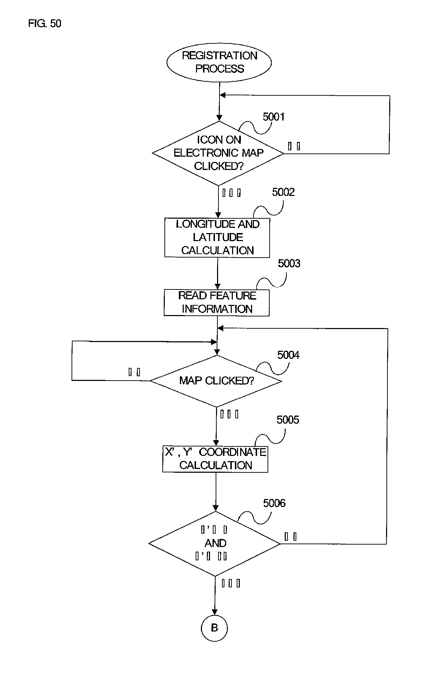

Fig. 50 is a flowchart (1) illustrating a process of correlating an electronic map to an atlas in which dot patterns are superimposed and printed.

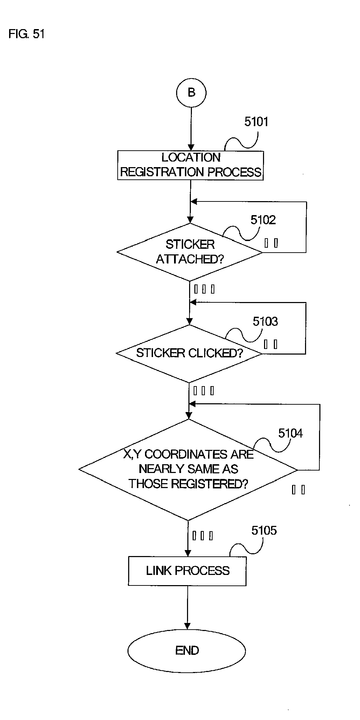

Fig. 51 is a flowchart (2) illustrating a process of correlating an electronic map to an atlas in which dot patterns are superimposed and printed.

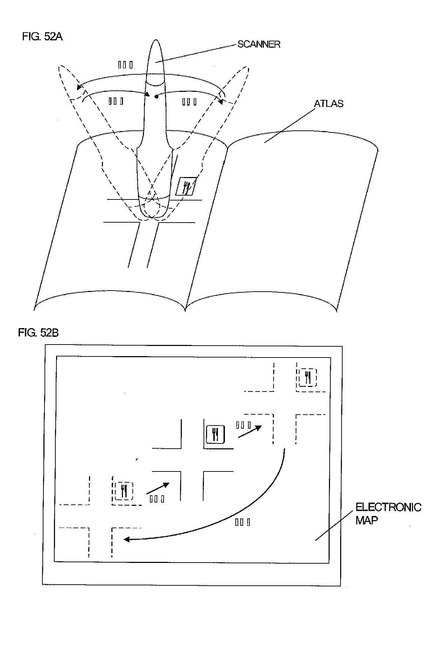

Figs. 52A and 52B are diagrams illustrating an operation that scrolls an electronic map by inclining a scanner.

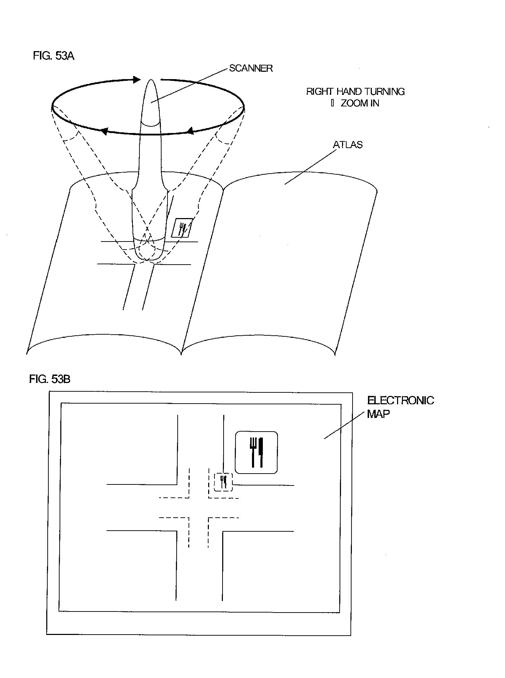

Figs. 53A and 53B are diagrams illustrating an operation that enlarges an electronic map by rotating a scanner.

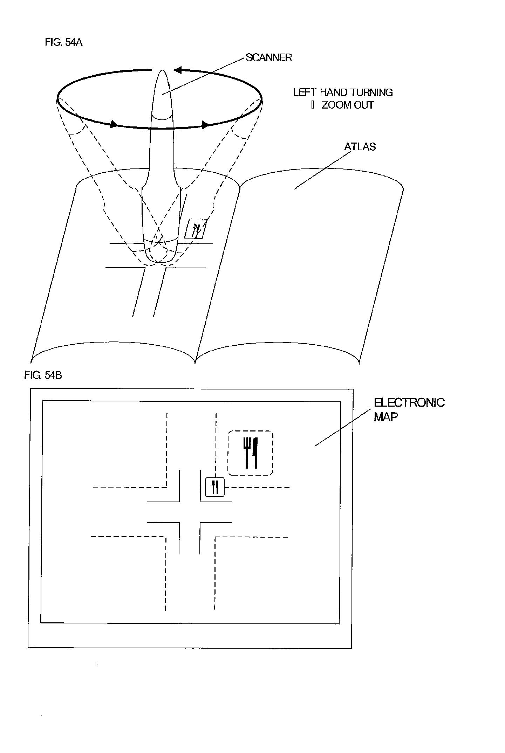

Figs. 54A and 54B are diagrams illustrating an operation that reduces an electronic map by rotating a scanner.

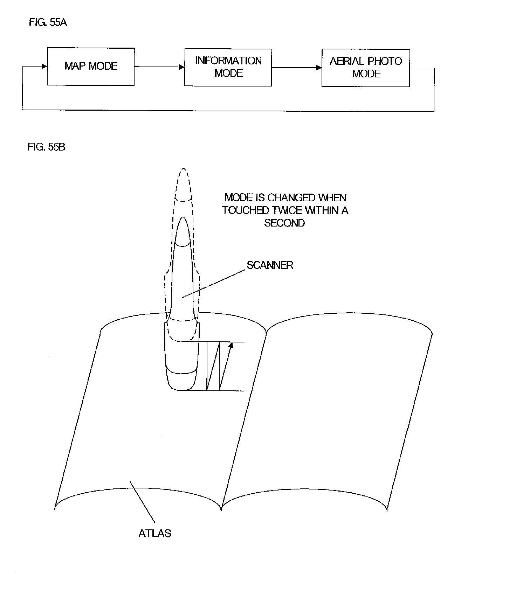

Figs. 55A and 55B are diagrams illustrating a function of switching modes of an electrical map by a grid tapping operation.

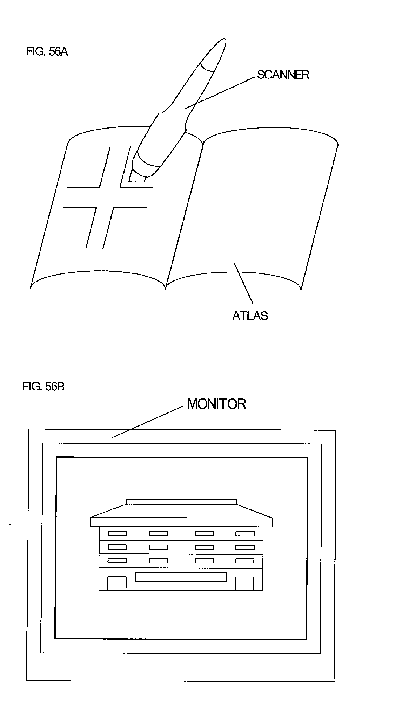

Figs. 56A and 56B are diagrams illustrating an operation that displays feature information on a monitor.

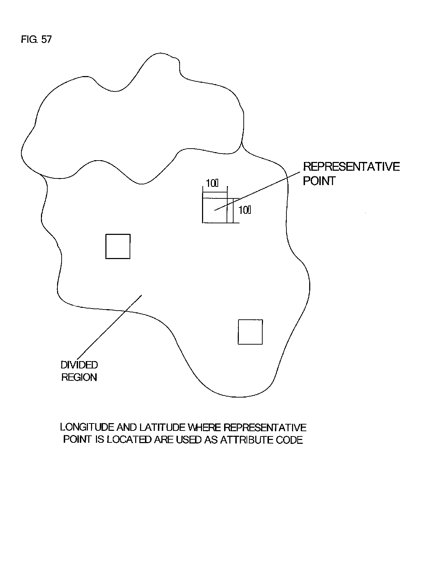

Fig. 57 is a diagram (1) illustrating a case where, in a divided region, longitude and latitude where a representative point on a map locates are used as an attribute code.

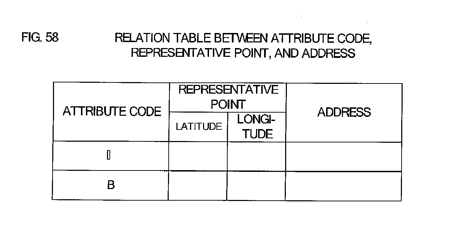

Fig. 58 is a diagram (2) illustrating a case where, in a divided region, longitude and latitude where a representative point on a map locates are used as an attribute code.

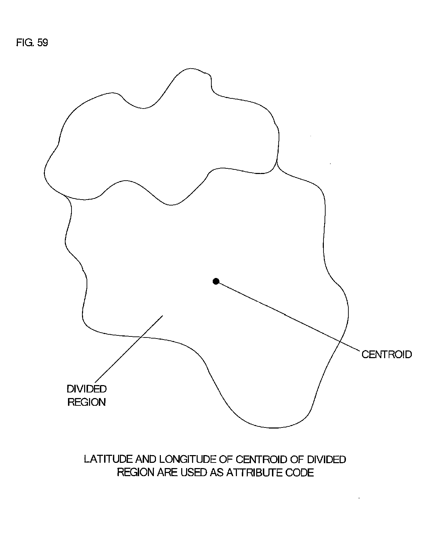

Fig. 59 is a diagram illustrating a case where, in a divided region, longitude and latitude of the centroid of the divided region are used as an attribute code.

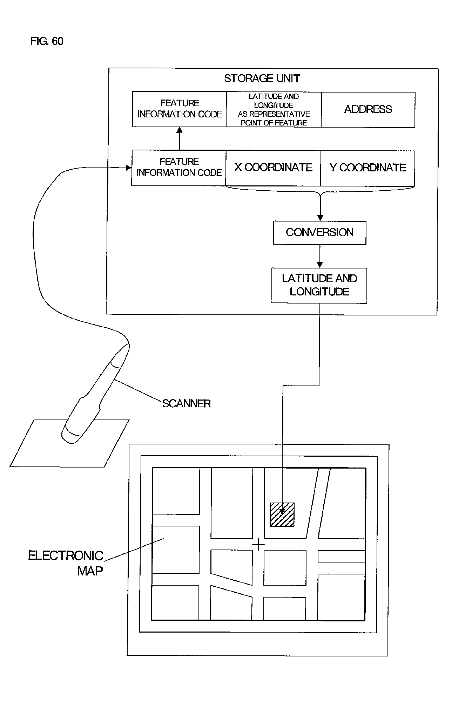

Fig. 60 is a diagram illustrating a case in which the scanner scans and reads a paper medium on which a map and a dot pattern are superimposed and printed, and displays a feature icon on an electronic map.

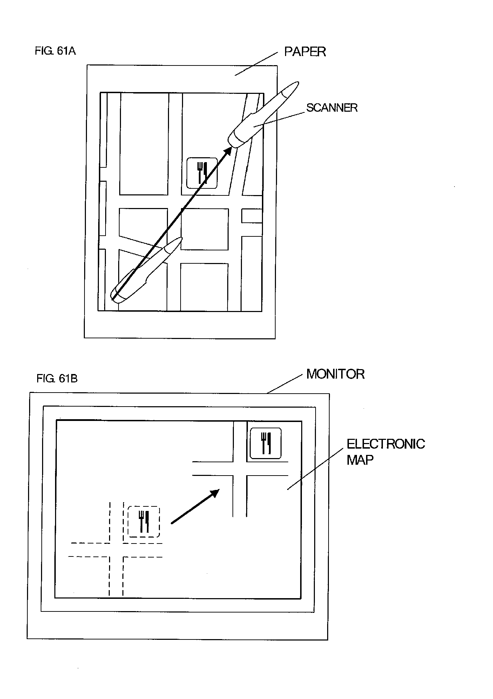

Figs. 61A and 61B are diagrams (1) illustrating a function of scrolling an electronic map by sliding the scanner on a printed map.

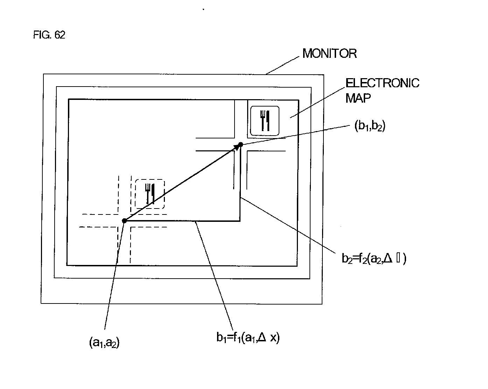

Fig. 62 is a diagram (2) illustrating a function of scrolling an electronic map by sliding a scanner on a printed map.

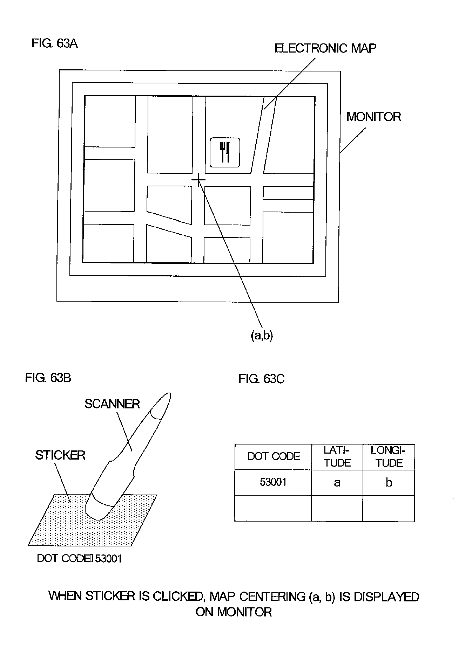

Figs. 63A to 63C are diagrams illustrating a function of correlating a dot pattern printed on a medium to longitude and latitude.

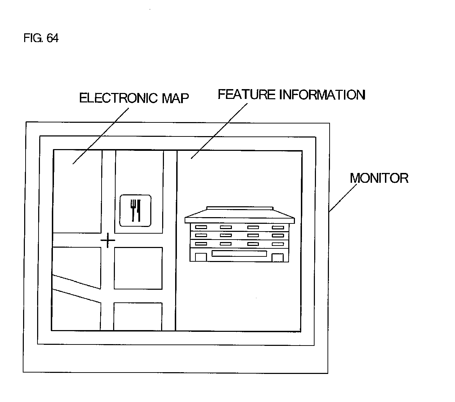

Fig. 64 is a diagram illustrating a case in which an electronic map and feature information are displayed on the same monitor.

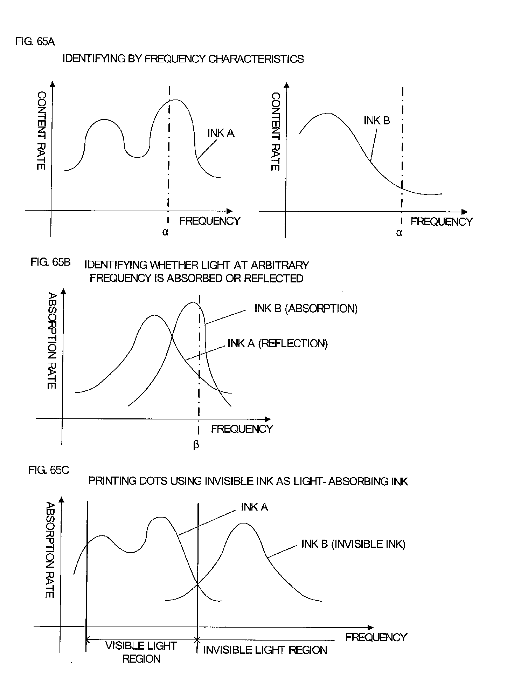

Figs. 65A to 65C are diagrams illustrating two kinds of ink used when superimposing and printing a map and a dot pattern.

[Description of Reference Numerals and Signs]

CPU: CENTRAL PROCESSING UNIT
MM: MAIN MEMORY
USB I/F: USB INTERFACE
HD: HARD DISK DEVICE
DISP: DISPLAY DEVICE (DISPLAY UNIT)
KBD: KEYBOARD
NW I/F: NETWORK INTERFACE
NW: NETWORK

[Best Mode for Carrying Out the Invention]

(First Embodiment: Planar Map)

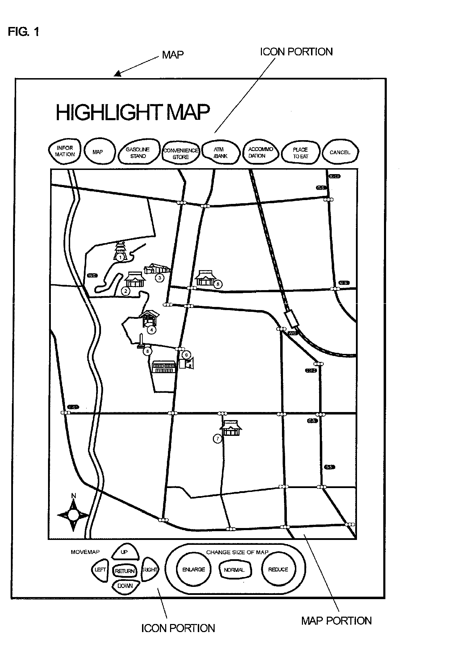

Figs. 1 to 22 relate to a first embodiment of the invention.

In this embodiment, a map is used as a medium. If the map is captured by a pen-type scanner (imaging unit), a map or information corresponding to the captured content is displayed on a display device (monitor) as an output unit. On the display device, an electronic map installed in a personal computer, or corresponding characters, figures, sound, and motion pictures are displayed.

Fig. 1 is a diagram showing a surface printing condition of a map (medium) which is used herein.

The map used herein has an icon portion where an icon is printed that instructs an operation for performing various kinds of display on the display device, and a map portion where roads, railroad lines, tourist facilities and the like are printed.

In each icon region of the icon portion, a dot pattern indicating a code corresponding to an operation instruction is printed. The dot pattern printed therein will be described later. The icon portion is printed in upper and lower sides of the map. On the upper side, icons of 'information', 'map', 'GS gas station', 'convenience store', 'ATM bank', 'accommodation', 'places to eat', and 'cancel' are provided.

On the lower side, icons of 'up', 'right', 'down', 'left', and 'return' for moving the electronic map, and icons of 'enlarge', 'normal', and reduce' for changing the size of the electronic map are printed.

In the map portion, symbols indicating roads, railroad lines, tourist facilities and the like are printed. In a region of the map portion, a dot pattern indicating XY coordinates corresponding to positions of the roads or the railroad lines are printed. Further, in the symbols, dot patterns obtained by coding facility information or the like are superimposed and printed, in addition to the XY coordinates corresponding to the positions of the facilities or the like.

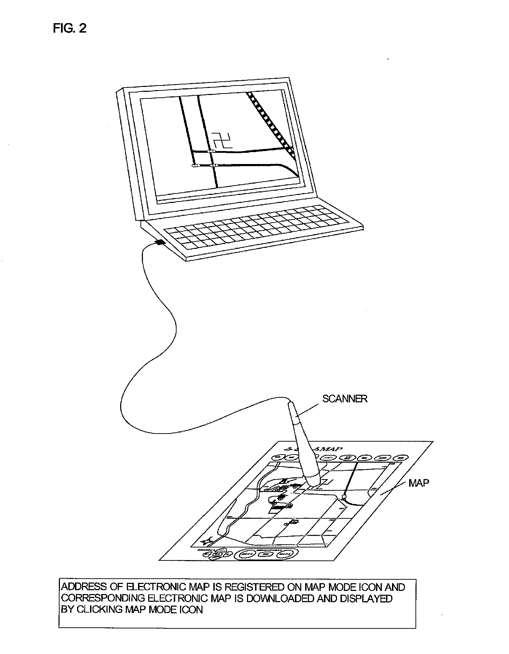

Fig. 2 is an explanatory view showing a utilization state of the map.

As shown in the drawing, in the invention, the map (medium) is used in connection with an electronic apparatus, such as a personal computer, and a pen-type scanner (imaging unit). That is, the pen-type scanner is connected to the computer by a USB cable or the like. A user clicks (captures) an arbitrary position, symbols, or the like in the map portion, or various icons printed in the icon portion using the scanner.

An address of the electronic map is registered in a map mode icon. If the user clicks the map mode icon, the electronic map registered in a hard disk device of the personal computer is read and then is output and displayed on a display.

Moreover, in Fig. 2, the scanner is connected to the computer, but the invention is not limited thereto. For example, the scanner may be used in connection with other communication apparatuses, such as a cellular phone, a PDA (Personal Digital Assistant), and the like.

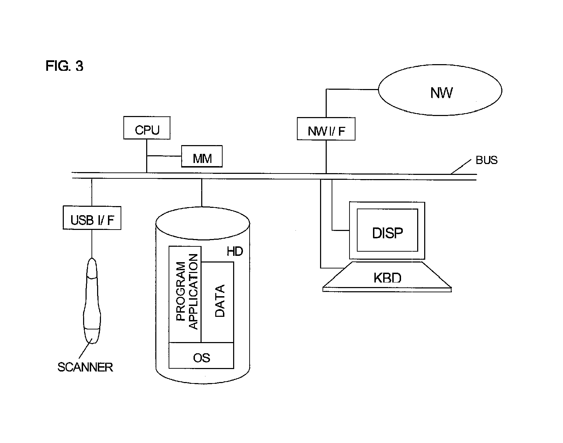

Fig. 3 is a hardware block diagram showing the configuration of the computer and the scanner.

As shown in Fig. 3, the personal computer has a central processing unit (CPU), a main memory (MM), and a hard disk device (HD), a display device (DISP) as an output unit, and a keyboard (KBD) as an input unit that are connected to the central processing unit by a bus.

Then, the scanner as an imaging unit is connected through a USB interface (USB I/F).

Though not shown, inadditiontothedisplaydevice (DISP), a printer, a speaker, and the like are connected as output units.

The bus (BUS) is connected to a general-use network (NM), such as the Internet, through a network interface (NW I/F), such that electronic map data, character information, image information, sound information, motion picture information, programs, and the like can be downloaded from a server (not shown).

Moreover, content data such as electronic map data, character information, image information, sound information, motion picture information and programs may also be read from a storage medium such as CD-ROM or DVD, in addition to the above-described case of downloading from the server.

In the hard disk (HD), an operating system (OS), application programs, such as an analysis program of a dot pattern used in this embodiment, and data, such as electronic map data, character information, image information, sound information, motion picture information, or various tables, are registered.

The central processing unit (CPU) sequentially reads the application programs in the hard disk through the bus (BUS) and the main memory (MM) and executes them. Further, the central processing unit (CPU) reads out data and outputs and displays the data on the display device (DISP). As such, the functions to be described in this embodiment are implemented.

The scanner has an infrared ray irradiation unit (red LED) and an optical imaging element, such as an IR filter, a CMOS sensor, and a CCD sensor, although not shown in the drawing. The scanner has a function of imaging reflected light of irradiation light irradiated on a surface of the medium. Here, the dot patterns on the surface of the medium are printed with carbon ink, and portions other than the dot patterns are printed with non-carbon ink.

Carbon ink has an infrared light absorption characteristic, and thus only dot portions in the captured image by the optical imaging element are imaged black.

Here, in this embodiment, although the irradiation light is explained with a case using infrared ray and dot patterns printed with carbon ink (ink having an infrared ray absorption characteristic), such irradiation light and characteristic of ink are not limited to these. For example, ultraviolet ray may be used and ink which has ultraviolet ray absorption characteristic may be used to print a dot pattern.

The captured image of the dot pattern read in such a manner is analyzed by a central processing unit (CPU) in the scanner, then is converted into a coordinate value or a code value, and subsequently is transmitted to the personal computer through a USB cable.

The central processing unit (CPU) of the personal computer refers to a table indicating the received coordinate value or code value and causes the display device (DISP) or the speaker (not shown) to output corresponding electronic map data, character information, image information, sound information, or motion picture information.

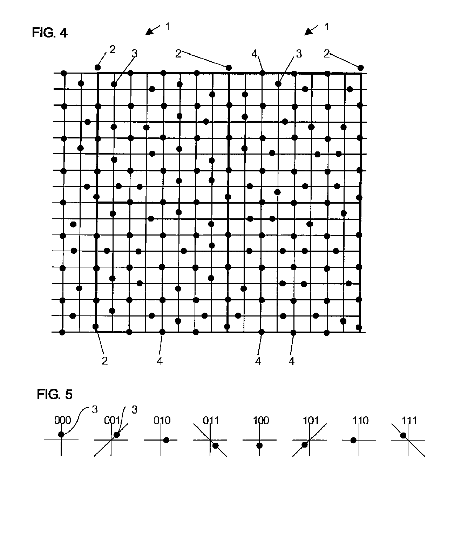

Next, the dot pattern used herein will be described with reference to Figs. 4 to 9D.

Fig. 4 is an explanatory view showing GRID1 as an example of a dot pattern of the invention.

Moreover, in the drawings, vertical and horizontal grid lines are shown for convenience of explanation, but do not exist on a printing surface. When the scanner as the imaging unit has an infrared ray irradiation unit, key dots 2, information dots 3, reference grid point dots 4 and the like constituting the dot pattern 1 are preferably printed with carbon ink that absorbs infrared light.

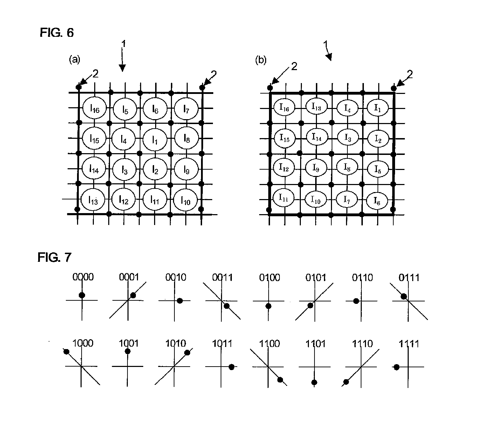

Fig. 5 is an enlarged view showing an example of the information dots of the dot pattern and bit display of data defined therein. Figs. 6A and 6B are explanatory views showing the information dots disposed around the key dot.

An information input/output method using the dot pattern of the invention includes a unit for generating the dot pattern 1, a unit for recognizing the dot pattern 1, and a unit for outputting information and programs from the dot pattern 1. That is, the dot pattern 1 is read as image data by a camera, first, the reference grid point dots 4 are extracted, then the key dots 2 are extracted on the basis of the fact that dots do not hit at positions where the reference grid point dots 4 are supposed to be disposed, and subsequently the information dots 3 are extracted. As such, through digitalization, the information regions are extracted and then the information is converted to numerical values. On the basis of the numerical information, the information and programs are output from the dot pattern 1. For example, the information, such as sound, or programs are output from the dot pattern 1 to an information output apparatus, a personal computer, a PDA, a cellular phone, or the like.

In the invention, upon generation of the dot pattern 1, fine dots for recognition of information, such as sound, that is, the key dots 2, the information dots 3, and the reference grid point dots 4 are arranged according to predetermined rules by a dot code generation algorithm. As shown in Fig. 4, in each block of the dot pattern 1 representing information, 5 x 5 reference grid point dots 4 are disposed on the basis of the key dots 2, and the information dot 3 is disposed in the vicinity of a virtual grid point 5 at the center surrounded by four reference grid point dots 4. Arbitrary numerical information is defined in this block. Moreover, in the example of Fig. 4, four blocks (in a bold-line frame) of the dot pattern 1 are arranged in parallel. Of course, the dot pattern 1 is not limited to four blocks.

One corresponding information and program may be output to one block or may be output to a plurality of blocks.

When the dot pattern 1 is taken as image data by a camera, imaging from distortion or slant of a lens of the camera, expansion and contraction of the paper, curvature of the surface of the medium, and distortion upon printing can be corrected using the reference grid point dots 4. Specifically, the correction function (Xn, Yn) = f(Xn', Yn') for converting the distorted four reference grid point dots 4 into the original rectangular shape is obtained, and the information dots 3 are corrected by the same function so as to calculate a vector of the correct information dots 3.

If the reference grid point dots 4 are disposed in the dot pattern 1, as for image data obtained by taking the dot pattern 1 using the camera, the distortion due to the camera is corrected. Accordingly, even when the image data of the dot pattern 1 is taken by a popular camera including a lens having high distortion, the image data obtained by taking the dot pattern 1 using the camera can be accurately recognized. Further, even though the image data is taken in a state where the camera is inclined with respect to the surface of the dot pattern 1, the dot pattern 1 can be accurately recognized.

As shown in Fig. 4, the key dots 2 are dots that are formed by shifting in a predetermined direction from the four reference grid point dots 4 at four corners of the block. The key dots 2 are representative points of the dot pattern 1 for one block representing the information dots 3. For example, the key dots 2 may be obtained by shifting the reference grid point dots 4 at the four corners of the block of the dot pattern 1 by 0.1 mm upward. When the information dots 3 represent X and Y coordinate values, the positions where the key dots 2 are shifted by 0.1 mm downward become coordinate points. However, this numerical value is not limited thereto, but may vary according to the size of the block of the dot pattern 1.

The information dots 3 are dots for the recognition of a variety of information. The information dots 3 are arranged around the key dot 2 as a representative point, and simultaneously are disposed at end points expressed by a vector with the virtual grid point 5, that is, the center surrounded by the four reference grid point dots 4, as a start point. For example, the information dots 3 are respectively surrounded by the reference grid point dots 4 and, as shown in Fig. 5, the dots spaced from the virtual grid point 5 by 0.1 mm have direction and length expressed by the vector. Then, these dots are rotated by 45 degrees in a clockwise direction and then disposed in eight directions. These dots represent three bits. Therefore, three bits x 16 = 48 bits can be expressed by the dot pattern 1 of one block.

Moreover, in the example shown in the drawing, the three bits are expressed by disposing the dots in the eight directions, but the invention is not limited thereto. For example, four bits can be expressed by disposing the dots in 16 directions. Of curse, other changes can be made.

The diameter of the key dot 2, the information dot 3, or the reference grid point dot 4 is preferably about 0.05 mm in consideration of visual quality, printing accuracy to paper quality, resolution of the camera, and optimum digitalization.

Further, a gap between the reference grid point dots 4 is about 0.5 mm in the horizontal/vertical direction in consideration of a required information amount for an imaging area and misrecognition of various dots 2, 3, and 4. The shift amount of the key dot 2 is preferably about 20% of the grid gap in consideration of misrecognition of the reference grid point dot 4 and the information dot 3.

A gap between the information dot 3 and the virtual grid point surrounded by the four reference grid point dots 4 is preferably a gap of 15 to 30% of a distance between adjacent virtual grid points 5. If a distance between the information dot 3 and the virtual grid point 5 is shorter than the gap, the dots are likely to be recognized as a large lump and are difficult to be considered as the dot pattern 1. In contrast, if the distance between the information dot 3 and the virtual grid point 5 is longer than the gap, it is difficult to recognize whether or not the information dot 3 keeps vector directionality around an adjacent virtual grid point 5.

For example, as shown in Fig. 6A, the information dots 3 of $I_1$ to $I_{16}$ are arranged from the center of the block in a clockwise direction to have a grid yap of 0.5 mm and represents 3 bits x 16 = 48 bits by 2 mm x 2 mm.

Moreover, subblocks that have individual information contents unaffected by other information content may be provided in the block. Fig. 6B shows these subblocks. In the subblocks $[I_1, I_2, I_3, I_4]$, $[I_5, I_6, I_7, I_8]$, $[I_9, I_{10}, I_{11}, I_{12}]$, and $[I_{13}, I_{14}, I_{15}, I_{16}]$, each having four information dots 3, independent data (3 bits x 4 = 12 bits) are expanded in the information dots 3. As such, if the subblocks are provided, error check can be easily performed in subblocks.

Preferably, vector directions (rotation direction) of the information dots 3 are uniformly determined for every 30 to 90 degrees.

Fig. 7 is a diagram showing an example of the information dot 3 and bit display of data defined therein, and shows another embodiment.

For the information dots 3, if two kinds of dots long and short distances from the virtual grid point 5 surrounded by the reference grid point dots 4 are used and the vector directions are eight directions, four bits can be represented. At this time, the long distance dot is preferably about 25 to 30% of the distance between adjacent virtual grid points 5 and the short distance dot is preferably about 15 to 20% thereof. However, an inter-center gap between the long and short distance information dots 3 is preferably longer than the diameter of these dots.

The number of information dot 3 surrounded by the four reference grid point dots 4 is preferably one in consideration of visual quality. However, when a desired information amount is large regardless of visual quality, one bit may be assigned for one vector, and a plurality of information dots 3 are represented, thereby having a large amount of information. For example, in case of an eight-directional vector of a concentric circle, the information dots 3 surrounded by the four reference grid point dots 4 can represent information of $2^8$. The 16 information dots of one block become $2^{128}$.

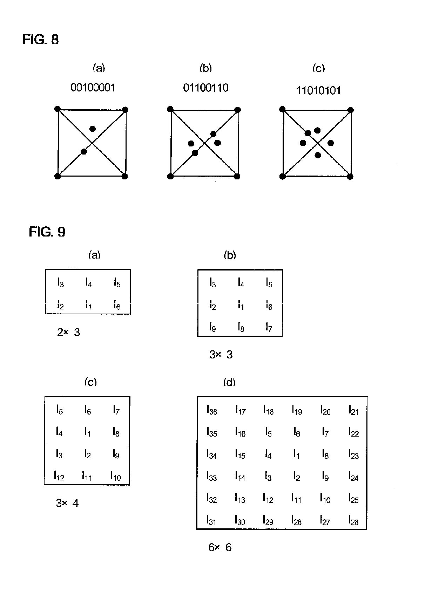

Figs. 8A to 8C show examples of the information dots and bit display of data defined therein. Specifically, Fig. 8A shows a case where two dots are disposed, Fig. 8B shows a case where four dots are disposed, and Fig. 8C shows a case where five dots are disposed.

Figs. 9A to 9D show modifications of the dot pattern. Specifically, Fig. 9A is a schematic view showing a case where six information dots are disposed, Fig. 9B is a schematic view showing a case where nine information dots are disposed, Fig. 9C is a schematic view showing a case where 12 information dots are disposed, and Fig. 9D is a schematic view showing a case where 36 information dots are disposed.

In the dot patterns 1 shown in Fig. 4 and Figs. 6A and 6B, 16 (4 x 4) information dots 3 are disposed in one block. However, the invention is not limited to the 16 information dots 3 in one block, but various changes can be made. For example, according to the size of a required information amount or resolution of the camera, six (2 x 3) information dots 3 may be disposed in one block (Fig. 9A), nine (3 x 3) information dots 3 may be disposed in one block (Fig. 9**B**), 12 (3 x 4) information dots 3 may be disposed in one block (Fig. 9C), or 36 information dots 3 may be disposed in one block (Fig. 9D).

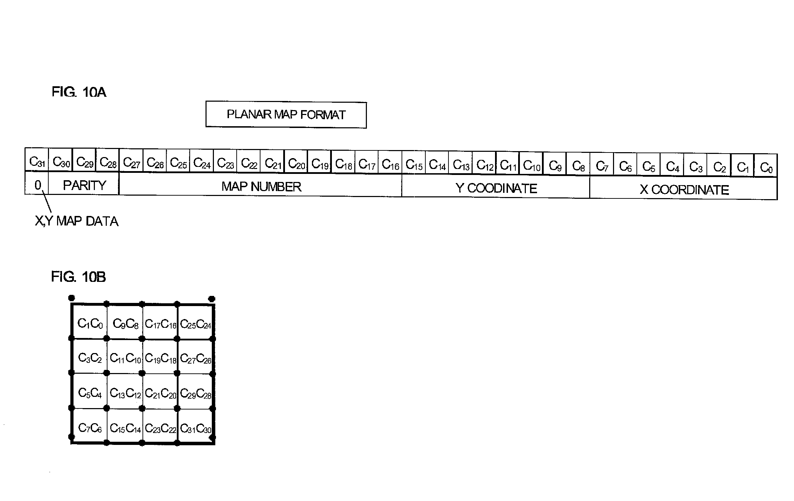

Next, Figs. 10A and 10B show the relationship between the dot pattern printed on the surface of the map, and the code value and the XY coordinate value.

Fig. 10A shows values, which are defined by 32 bits of $C_0$ to $C_{31}$ of the dot pattern, by a table. $C_0$ to $C_7$ represent X coordinates, $C_8$ to $C_{15}$ represent Y coordinates, $C_{16}$ to $C_{27}$ represent map numbers, $C_{28}$ to $C_{30}$ represent parity bits, and $C_{31}$ represents XY map data.

Moreover, $C_{16}$ to $C_{27}$ are not limited to map numbers, but may represent other codes (code values).

These values are disposed in grid regions shown in Fig. 10B.

As such, in this dot pattern, the X coordinates, the Y coordinates, and corresponding code information (code values) can be registered in 4 x 4 grid regions. Accordingly, specific code information can be given to a region of a symbol on the map, together with the XY coordinates. With the formatting of such a dot pattern, the information based on the XY coordinates, and texts, images, motion pictures, and sound information corresponding to a symbol icon of a building or the like can be correlated and output.

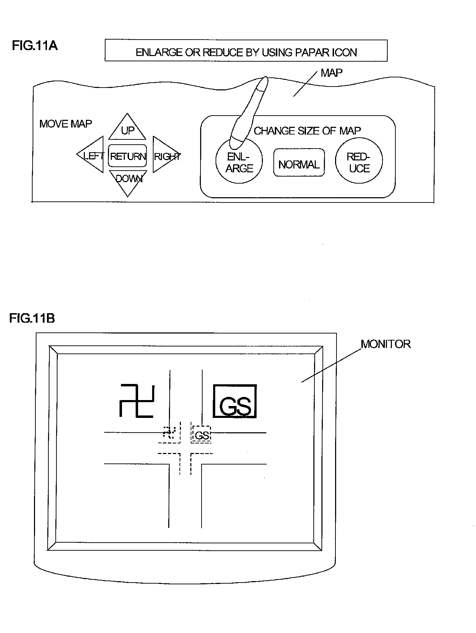

Figs. 11A and 11B are diagrams illustrating an operation that enlarges or reduces an electronic map by clicking an icon displayed on the lower side of the icon portion.

Fig. 11A is a diagram showing an operation that is performed on the map by a user, and Fig. 11B is a diagram showing a video that is displayed on the display device (monitor) when the corresponding operation is performed. As shown in Fig. 11A, if the user clicks the symbol 'enlarge' located on the lower side of the icon portion using the scanner, an imaging element captures the dot pattern printed on the symbol. Then, the captured image is analyzed by the internal central processing unit (CPU) of the scanner, then is converted into a dot code (coordinate value or code value), and subsequently is transmitted to the personal computer.

The central processing unit (CPU) of the personal computer refers to a table in the hard disk device (HD) on the basis of the dot code, reads out image data (in this example, enlarged data of the electronic map) stored corresponding to the dot code, and displays the image data on the display device (monitor).

The central processing unit (CPU) may perform a display control of the display device (DISP) on the basis of the dot code, and may directly enlarge the image data of the map displayed on the display (monitor).

In such a manner, as shown in Fig. 8B, the magnification of the electronicmap on the display device (monitor) is enlarged. Similarly, if the symbol 'reduce' is clicked, the magnification of the electronic map is reduced. If the symbol 'normal' is clicked, the normal magnification returns.

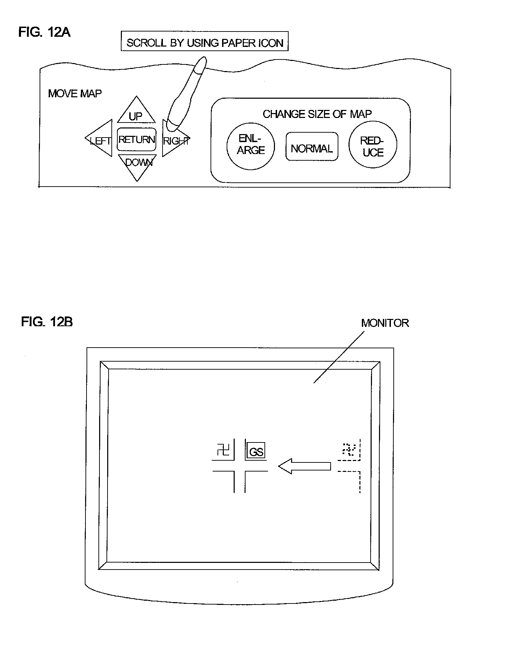

Figs. 12A and 12B are diagrams illustrating an operation that moves a map to be displayed on the display device (monitor) by clicking an icon displayed on the lower side of the icon portion.

In Fig. 12A, if the icon 'right' is clicked (captured by the scanner), the central processing unit (CPU) of the scanner analyzes the dot pattern of the icon by an analysis program, converts the dot pattern into the dot code (coordinate value ) or code value), and transmits the converted dot code to the personal computer.

The central processing unit (CPU) of the personal computer that receives the dot code refers to the table in the hard disk device (HD) on the basis of the dot code, reads out the image data (in this example, map data on the left and right sides than the coordinate position of the electronic map) stored corresponding to the dot code, and displays the image data on the display device (monitor).

The central processing unit (CPU) may perform a display control of the display device (DISP) on the basis of the dot code, and may directly move and draw the image data of the map displayed on the display (monitor).

In the above-described embodiment, an example where the image data displayed on the display device (DISP) moves in the left direction on the screen by the icon 'right' has been described, but the image data may move in the right direction.

Similarly, if the user clicks 'left,' the image data of the map is scrolled leftward (or rightward). If 'up' is clicked, the image data of the map is scrolled upward (or downward), and, if 'down' is clicked, it is scrolled downward (or upward).

In addition, if 'return' is clicked, the image data of the map returns to the state before the scroll.

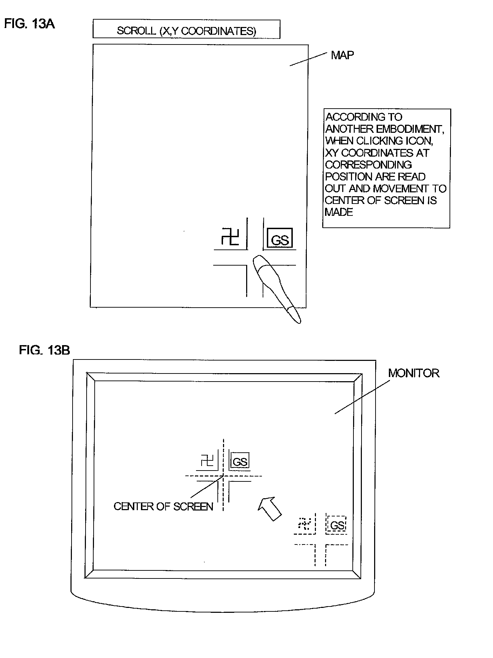

Figs. 13A and 13B are diagrams illustrating an operation that scrolls the electronic map by clicking the map by the user. Figs. 13A and 13B are diagrams illustrating a case where the user clicks an arbitrary position, such as a road, a river, or the like on the map. Specifically, Fig. 13A is a diagram showing an operation that is performed on the map by the user, and Fig. 13B is a diagram showing a video that is displayed on the display device (monitor) when the corresponding operation is performed. For example, as shown in Fig. 13A, if the user clicks a cross of the road using the scanner, the central processing unit (CPU) of the scanner analyzes the dot pattern by an analysis software program. The dot code is transmitted to the central processing unit (CPU) of the computer. The computer reads only a code representing the XY coordinates of that position in the dot code. In such a manner, as shown in Fig. 13B, the image data of the map is scrolled such that the cross is located at the center of the display.

According to the invention, a click point is not limited to the road or river, but may be a symbol on the map, such as a gas station. If the user clicks the symbol, according to the above-described method, the code representing the XY coordinates of the symbol is read, and the image data of the map is scrolled such that the symbol is located at the center of the display.

Figs. 14A and 14B are diagrams illustrating an operation that scrolls the electronic map by a grid drag operation.

Fig. 14A is a diagram showing an operation that is performed on the map by the user, and Fig. 14B is a diagram showing a video that is displayed on the display when the corresponding operation is performed. Here, the grid drag operation refers to moving the scanner in a state where the scanner is in contact with the map portion. In this example, the user initially clicks the center of the cross, and moves the scanner to the center of the map portion so as not to be separated from the map portion. With this operation, as shown in Fig. 14B, the screen is scrolled such that the center of the cross is located at the center of the display.

With this operation, first, the scanner reads the coordinate value of the cross, and then the coordinate value read changes as the scanner moves.

The coordinate values changed in such a manner are sequentially transmitted to the personal computer. The central processing unit (CPU) of the personal computer moves (scrolls) the electronic map displayed on the display device (monitor) on the basis of the change of the coordinate value. As a result, according to the invention, the electronic map is scrolled such that the clicked point by the scanner is displayed at the center of the display.

Figs. 15A and 15B are diagrams illustrating a search function of facilities and the like.

Fig. 15A is a diagram showing an operation that is performed on the map by the user, and Fig. 15B is a diagram showing a video that is displayed on the display device (monitor) when the corresponding operation is performed.

If the user clicks any one icon of 'GS', 'ATM', 'accommodation', and 'places to eat' printed on the upper side of the map, an icon symbol indicating the facility corresponding to the symbol icon is displayed on the electronic map. For example, as shown in Fig. 15A, if the user clicks the icon 'GS', as shown in Fig. 15B, a symbol 'GS' indicating a gas station is displayed at a position on the electronic map where the gas station exists. Similarly, if the user clicks the icon 'ATM', an icon indicating an ATM of a bank or the like is displayed. Further, if the user clicks the icon accommodation', a symbol indicating a lodging facility, such as a hotel or an inn, is displayed, and, if the user clicks the symbol 'places to eat', a symbol indicating a place to eat such as a restaurant is displayed. Accordingly, the user can easily know where a target facility is located.

Here, in the icons 'GS', 'ATM', 'accommodation', and 'places to eat', code values are printed as a dot pattern for every predetermined icon. Then, if the imaging element of the scanner reads the dot pattern as a captured image, the central processing unit (CPU) of the scanner converts the dot pattern into the code value on the basis of the analysis program of a ROM, and transmits the code value to the personal computer.

The central processing unit (CPU) of the personal computer searches the table on the basis of the code value, and maps and displays a symbol image corresponding to the code value on an electronic map image displayed on the display (monitor).

In a state where the symbol is displayed on the electronic map, if the user again clicks the icon corresponding to the symbol, the symbol on the electronic map is removed.

Figs. 16A and 16B are diagrams illustrating an information mode.

The information mode refers to a state where information (characters, images, sound, motion pictures, and the like) corresponding to the symbol on the map is explained.

In this embodiment, in an initial setting, a map mode is set. In order to switch to the information mode, as shown in Fig. 16A, the user first clicks the icon 'information' on the upper side of the icon portion. Accordingly, a switching processing from the map mode to the information mode is performed.

Specifically, in the icon 'information', a predetermined code value is printed as a dot pattern. Then, if the imaging element of the scanner reads the dot pattern as image data, the central processing unit (CPU) of the scanner converts the dot pattern into the code value by the analysis program of the ROM, and transmits the code value to the personal computer.

The central processing unit (CPU) of the personal computer that received the code value switches a display mode of the display (monitor) to the information mode.

Next, the user clicks a symbol indicating a facility whose information is desired. For example, as shown in Fig. 16A, the user clicks an icon symbol of a temple. Then, a code value indicating the temple is transmitted to the personal computer. The central processing unit (CPU) of the personal computer that received the code value of the temple searches the table on the basis of the code value and outputs information (characters, images, sound, motion pictures, and the like) corresponding to the code value from the display (monitor). Here, the video of the temple is displayed on the display, and sound for explaining the temple is output from the speaker.

Figs. 17A to 17C are diagrams illustrating a method of switching from the map mode to the information mode.

As shown in Figs. 16A and 16B, on the upper side of the icon portion, two types of icons of 'information' and 'map' are printed. However, mode switching can be performed by an operation of the scanner, instead of clicking these icons.

Fig. 17A shows a case where switching is performed by a grid tapping operation. The grid tapping operation refers to an operation that stands the scanner in a direction perpendicular to the map and hits against the map while moving the scanner up and down. For example, if the user performs the grid tapping operation on the symbol of the temple, switching from the map mode to the information mode is performed, and the video of the temple is displayed on the display (monitor).

Specifically, the central processing unit (CPU) of the personal computer recognizes that the grip tapping operation is performed when the substantially same XY coordinate information or code information is read multiple times within a predetermined time.

Fig. 17B shows a case where switching is performed by a grid sliding operation. The grid sliding operation refers to an operation that circularly slides the scanner on the map. The user performs the grid sliding operation so as to surround the symbol. Accordingly, switching from the map mode to the information mode is performed, and the video of the temple is displayed on the display (monitor).

Specifically, the central processing unit (CPU) of the personal computer recognizes that the grip sliding operation is performed when XY coordinate information read within a predetermined time by the circular grid sliding operation of the imaging unit on the surface of the medium is recognized as a substantially circular trace.

Fig. 17C shows a case where switching is performed by a grid scratch operation. The grid scratch operation refers to an operation that moves the scanner on the map several times as a scratch. The user performs the grid scratch operation on the symbol. Accordingly, switching from the map mode to the information mode is performed, and the video of the temple is displayed on the display (monitor).

Specifically, the central processing unit (CPU) of the personal computer recognizes that the grid scratch operation is performed when a trace of XY coordinates read within a predetermined time is recognized as a repetition of a short linear trace (scratch).

The operation of the scanner for switching from the map mode to the information mode is not limited to the above-described embodiment. With other operations than the above-described operations by the user, switching to the information mode may be performed.

Figs. 18A to 18C are diagrams illustrating an operation that scrolls the electronic map according to an orientation of the scanner (grid tilt operation). Specifically, Fig. 18A is a diagram illustrating an operation of the user, Fig. 18B is a diagram illustrating a case where the inclination of the scanner changes with respect to the vertical direction, and Fig. 18C is a diagram illustrating a state where the electronic map is being scrolled on the display (monitor).

The orientation of the scanner refers to an orientation in which a frame buffer becomes upward upon imaging. As shown in Fig. 18A, the user sets the orientation of the scanner in a direction to be scrolled and clicks. Then, a position where the user clicked is scrolled in a direction indicated by the orientation of the scanner.

In this case, a scroll distance of the electronic map is determined by the inclination of the scanner with respect to the vertical line of the map and an angle between the scanner and the map. In Fig. 18B, (1) shows a state where the scanner stands upright before inclined, (2) shows a state where the scanner is inclined forward, (3) shows a state where the scanner is further inclined forward, (4) shows a state where the scanner is inclined backward, and (5) shows a state where the scanner is further inclined backward. As such, the operation that inclines the scanner forward or backward is referred to as grid tilt. For each case, Fig. 18C illustrates how the electronic map is scrolled on the display (monitor). It is assumed that a point on the map portion clicked by the user is located at the center of the screen before the scanner is inclined. Then, when the scanner is inclined forward, the electronic map moves in parallel with the same direction as a direction indicated by the orientation of the scanner. Further, if the scanner is deeply inclined, a moving speed and a moving distance increase. Meanwhile, when the scanner is inclinedbackward, the electronic map moves in a direction opposite to the direction indicated by the orientation of the scanner by 180 degrees. Like a case where the scanner is inclined forward, as the scanner is deeply inclined, the moving speed and the moving distance increase.

Figs. 19A to 19C are diagrams illustrating an operation that scrolls the map displayed on the display (monitor) according to the inclination of the scanner with respect to the orientation of the dot pattern. Specifically, Fig. 19A is a diagram illustrating the operation of the user, Fig. 19B is a diagram illustrating a case where the inclination of the scanner with respect to the vertical direction changes, and Fig. 19C is a diagram illustrating a state where the electronic map is scrolled on the display (monitor).

The inclination of the scanner refers to an angle between the orientation of the above-described dot pattern and a scanner main body. The electronic map is scrolled in a direction in which the scanner is inclined.

A scroll distance is determined by a depth at which the scanner is inclined. In Fig. 19B, (1) shows a state where a pen stands upright before inclined, (2) shows a state where the pen is inclined forward, and (3) shows a state where the pen is further inclined forward. For each case, Fig. 19C illustrates how the electronic map is scrolled on the display (monitor). It is assumed that a point on the map clicked by the user is located on the middle lower right of the screen before the scanner is inclined. When the scanner is inclined forward, the electronic map moves in parallel with the same direction as the direction indicated by the orientation of the scanner. Further, as the scanner is deeply inclined, the moving speed and the moving distance increase.

The direction in which the scanner is inclined and the scroll direction of the electronic map on the display may be reversed.

Figs. 20A to 20C are diagrams illustrating the relationship between the inclination of the scanner and an angle at which the map on the display (monitor) is scrolled.

The dot pattern on the map is superimposed and printed in the same direction as a vertical direction of the paper. As shown in Fig. 20A, it is assumed that an angle between the orientation of the dot pattern and the orientation of a camera in the scanner is $\alpha$. Further, was shown in Fig. 20B, it is assumed that, when the user inclines the scanner, an angle between the inclination of the scanner (pen) and the orientation of the camera in the scanner is $\beta$. In this case, the electronic map moves in a direction of an angle $\gamma$ between the inclination of the scanner and the orientation of the dot. That is, the angle $\gamma$ becomes as follows,

$$\gamma = \alpha + \beta.$$

The inclination of the scanner can be recognized by a difference in brightness in an imaging field, and this will be described below.

Figs. 21A and 21B are diagrams illustrating an operation of the scanner for enlarging the screen displayed on the display (monitor) by a grid grind operation.

The grid grind operation refers to an operation that rotates the scanner. Fig. 21A is a diagram showing an operation that is performed on the map by the user, and Fig. 21B is a diagram showing a video that is displayed on the display (monitor) when the corresponding operation is performed. As shown in Fig. 21A, if the user performs the grid grind operation of the scanner in a right direction, as shown in Fig. 21B, the electronic map is enlarged.

The grid grind operation is an operation that rotates the scanner, and the grid grind operation in the right direction is also referred to as 'grid grind right'.

Specifically, the central processing unit (CPU) of the personal computer recognizes that the grid grind operation is performed when, in an inclined state where an imaging optical axis keeps a predetermined inclination with respect to the vertical line of the surface of the medium, a change in the inclined state of the imaging optical axis is recognized according to the rotation around the vertical line.

Figs. 22A and 22B are diagrams illustrating an operation of the scanner for reducing the screen displayed on the display (monitor) by a grid grind operation.

Fig. 22A is a diagram showing an operation that is performed on the map by the user, and Fig. 22B is a diagram showing a video that is displayed on the display (monitor) when the corresponding operation is performed. As shown in Fig. 22A, if the user performs the grid grind operation of the scanner in a left direction, as shown in Fig. 22B, the electronic map is reduced.

As such, the grid grind operation in the left direction is referred to as 'grid grind left'.

(Second Embodiment: Three-dimensional Map)

Figs. 23A to 31C relate to a second embodiment of the invention and illustrate display of a three-dimensional map when an electronic map is a three-dimensional map.

In this embodiment, like the planar map, a map on which dot patterns are superimposed and printed is also used in connection with an electronic apparatus, such as a computer. That is, if an arbitrary point on the map, such as a mountain or a pond is clicked using the scanner, a three-dimensional image corresponding to that point is displayed on the display (monitor).

Figs. 23A and 23B show the relationship between a dot pattern printed on the surface of the map, and a code value and an XYZ coordinate value.

Fig. 23A shows values, which are defined by 32 bits of $C_0$ to $C_{31}$ of the dot pattern, by a table. $C_0$ to $C_7$ represent X coordinates, $C_8$ to $C_{15}$ represent Y coordinates, $C_{16}$ to $C_{23}$ represent Z coordinates, $C_{24}$ to $C_{27}$ represent map numbers, $C_{28}$ to $C_{30}$ represent parity bits, and $C_{31}$ represents XYZ map data.

Moreover, $C_{24}$ to $c_{27}$ are not limited to map numbers, but may represent other codes.

These values are disposed in grid regions shown in Fig. 23B.

Figs. 24A to 24C are diagrams illustrating an operation that changes a view point by the above-described grid grind operation.

Fig. 24A is a diagram illustrating a case where the scanner rotates in a counterclockwise direction, Fig. 24B is a diagram illustrating a case where the scanner rotates in a clockwise direction, and Fig. 24C is a diagram illustrating a change in view point in Figs. 24A and 24B.

In Fig. 24C, Z denotes an altitude at a point clicked by the user. If the user clicks an arbitrary point, a scene viewed from the point clicked by the user is displayed on the display device (monitor) as a three-dimensional image. In this case, a view point becomes $Z + h_1$ as the sum of the altitude and the height of human's eyes, and this view point becomes a normal view point. As shown in Fig. 24A, if the user rotates the scanner in the counterclockwise direction, the view point rises to a position (1). Then, as shown in Fig. 24B, if the scanner rotates in the clockwise direction, the risen view point falls.

Figs. 25 and 26A to 26C are diagrams illustrating an operation that tilts up or down the view point according to the orientation of the scanner.

Fig. 25 is a diagram illustrating a user's operation on the map. As indicated by (1), the user first places the scanner perpendicularly to the map. Then, as shown in Fig. 26A, the electronic map is displayed on the display (monitor) in a normal mode. As indicated by (2) of Fig. 25, if the user inclines the scanner forward, as shown in Fig. 26B, the view point moves downward as if a person's posture falls forward. Further, as indicated by (3) of Fig. 25, if the scanner is inclined backward, as shown in Fig. 26C, the view point moves upward as if a person pulls back his/her upper part.

Figs. 27A to 28B are diagrams illustrating an operation that changes an angle by inclining the scanner left or right.

In Fig. 27A, (1) shows a state where the scanner stands upright with respect to the map, (2) shows a state where the scanner is inclined left, and (3) shows a state where the scanner is inclined right.

In the state (1), the three-dimensional map is displayed on the display (monitor) in a normal mode. As indicated by (2), if the user inclines the scanner left, as shown in (1) of Fig. 28, a screen is displayed in a state where the view point moves left. As indicated by (3), if the user inclines the scanner right, as shown in (2) of Fig. 28, a screen is displayed in a state where the view point moves right.

Figs. 29A to 30B are diagrams illustrating an operation that changes a magnification of the map displayed on the screen by a grid pump operation.

The grid pump operation is an operation that quickly inclines the scanner forward or backward repeatedly. Before the grid pump operation is performed, as shown in Fig. 29B, the same screen as an image when a normal lens of the camera captures is displayed on the display (monitor). As indicated by (1) of Fig. 29A, if the user quickly inclines the pen forward repeatedly, as shown in Fig. 30A, the image is gradually enlarged, and the same screen as an image captured using a telephoto lens is displayed. Further, as indicated by (2) of Fig. 29A, if the pen its quickly inclines backward repeatedly, a fiend angle is gradually widened and, as shown in Fig. 30B, a screen when an image is captured using a wide lens is displayed.

Figs. 31A to 31C are diagrams illustrating an operation that resets a view point operation by the grid tapping operation.

The grid tapping operation is an operation that stands the scanner perpendicularly to the map and hits against the map while moving the scanner up and down.

For example, as shown in Fig. 31B, it is assumed that a screen of a state captured by the wide lens at a high-altitude position by the above-described grid pump operation is displayed. In this case, as shown in Fig. 31A, if the grid tapping operation is performed, as shown in Fig. 31C, the display mode is reset to the normal mode.

Even in a telephoto mode by the grid pump operation, similarly, the display mode is reset to the normal mode.

Even when the view point changes by the grid grind operation described with reference to Figs. 24A to 24C, the view point is reset by the grid tapping operation.

Figs. 32A and 32B show another embodiment of the scanner.

Fig. 32A shows a state where the scanner is fixed by a tripod-like tool. An opening is provided at the center of the tool, and rubber is formed around the opening. The scanner is inserted into the opening in use. With this structure, when the user performs an operation, such as a grid grind, the scanner can be fixed, and the sensor unit can be prevented from reading a dot pattern other than a target dot pattern.

Fig. 32B shows a state where the scanner is fixed by springs in a cup-like tool. Openings are provided at upper and lower parts of the tool, and a plurality of springs are provided at the upper part. The scanner is fixed by the springs in use.

In the known scanner, there was a problem when the user performs various operations using the scanner, that a bottom part slightly moves during rotation or other operations, and the dot pattern cannot be accurately read. In contrast, with the above-described structure, the bottom part is fixed, and thus the dot pattern can be accurately read. Further, with rubber or springs, the user can smoothly perform the operation.

Figs. 33 to 37 are diagrams illustrating a method of calculating an inclination direction when the scanner is inclined.

The inclination of the scanner (imaging unit) with respect to the vertical direction of the surface of the medium (map) can be recognized by a difference in brightness in imaging field of the scanner, as shown in Fig. 20B.

The inclination direction of the scanner refers to an angle between the scanner and the map, as shown in Fig. 34A. Which direction the user inclines the scanner can be calculated by the following method.

First, calibration is performed. The scanner stands upright with respect to the map, and then brightness of cells 1 to 48 shown in Fig. 33 is measured. Fig. 33 shows a region around the scanner. It is assumed that brightness at that time is BL0 (i). i is the value of the measured cell. For example, brightness of the 24th cell is represented by BL0(24).

In the scanner, two LEDs are provided. For this reason, even though the scanner stands upright with respect to the map, there is a difference in brightness between a cell around the LED and a cell spaced from the LED. Accordingly, the calibration is performed.

Next, brightness when the scanner is inclined is measured. As shown in Fig. 34A, brightness of the cells 1 to 48 when the scanner is inclined in a predetermined direction is measured. It is assumed that brightness of the cell i is BL(i). Next, a difference between BL (i) and BL0(i) in each cell is measured. Next, the following is calculated,

$$Max\ (BL0(i)\ -\ BL(i)).$$

When the scanner is inclined, a direction opposite to the inclination direction is darkened. This is because the LED is also inclined in the inclination direction of the scanner, and thus the distance from the LED becomes more distant in the direction opposite to the inclination direction. Accordingly, as shown in Fig. 34B, a direction opposite to the cell having the maximum difference becomes a position where the scanner is inclined.

Then, the inclination direction of the scanner is determined.

Figs. 33 to 34B show another method of determining the inclination direction and the angle by performing the calibration.

Initially, the calibration is performed. First, the scanner stands upright with respect to the map, and brightness of the cells 1 to 48 shown in Fig. 33A is measured. It is assumed that brightness in the cell i is BL0(i).

Next, the scanner is inclined by 45°, and goes round with the tip of the pen as an axis, as shown in Fig. 34. In this case, it is assumed that brightness when the scanner is located at a position of the cell i is BL45(i). BL45(i) from the cells 1 to 48 are measured. With the above operations, the calibration is completed.

Next, when the user inclines the scanner, brightness of the cells 1 to 48 is measured. It is assumed that brightness of the cell i is BL(i), and i = 1, n (= 48). Next, the following is calculated,

$$Max\frac{BL0(i)-BL(i)}{BL0(i)-BL45(i)}, i=1, n=1, n(=48)\ .$$

Since BL0(i) - BL45(i) is constant, when the value of BL0(i) - BL(i) is the maximum, that is, when BL (i) is the minimum, the following becomes the maximum,

$$\frac{BL0(i)-BL(i)}{BL0(i)-BL45(i)}, i=1, n=1, n(=48)\ .$$

As described above, since the direction opposite to the inclination direction of the scanner is most darkened, the direction opposite to the cell i in this case becomes the inclination direction of the scanner.

The inclination angle of the scanner is as follows,

$$\theta = 45 \times \frac{BL0(i) - BL(i)}{BL0(i) - BL45(i)}, i = 1, n = 1, n(= 48) \ .$$

In the above-described equation, it is assumed that an angle θ is linear with respect to brightness, but strictly, the following approximation using a trigonometrical function results in an increase in accuracy. Then, the angle is as follows,

$$\theta = \frac{1}{2} \cos^{-1}\left[ \frac{BL(i) - BL45(i)}{BL0(i) - BL45(i)} \right] \ .$$

Fig. 36 shows a method of measuring the inclination direction using a Fourier function.
As shown in Fig. 35, eight cells of the cells 1 to 8 are selected as measurement points, and brightness of each cell is measured.
A sine function is represented as follows,

$$\alpha_j = \left\{ \sin\left(\frac{1}{2}\right)^{j-1}\left(\theta - \beta_j\right) \right\} \ .$$

That is, the number of unknown quantities is two.
Therefore, when n measurement points are provided, the number of discrete points becomes n. Accordingly, the sum of n/2 sine functions is calculated, and this becomes brightness BL(i) at a radius from the analysis center. That is, the following is represented,

$$BL(i) = \sum_{j=1}^{\frac{n}{2}} \alpha_j \left\{ \sin\left(\frac{1}{2}\right)^{j-1}\left(\theta - \beta_j\right) \right\} \ .$$

However, n = 2m (where n is the number of measurement points).
In this embodiment, since the number of measurement points is 8, n = 8. Accordingly, $\alpha$1 to $\alpha$4 and $\beta$1 to $\beta$4 of Fourier series are calculated by synthesizing equations of four sine functions. Then, brightness BL(i) at the radius from the analysis center is represented by the sum of the four sine functions.
From the above equation, the angle e having the minimum BL(i) becomes the darkest position, and a direction opposite thereto by 180 degrees becomes the inclination direction of the scanner.
Fig. 37 shows a method of measuring the inclination direction by solving an equation of the n-th degree.
A graph of Fig. 37 shows a function of the n-th degree. When the function of the n-th degree is used, brightness BL(i) at the radius from the analysis center is as follows.

```
BL(i) = α1 (θ - β1) · α2 (θ - β2) … αj (θ - βj)
```

provided, j = n/2 and n = 2m.
As shown in Fig. 35, in this embodiment, since the number of measurement points is 8, it is necessary to calculate eight solutions. Since two unknown quantities of $\alpha$j and $\beta$j are included in one equation, four equations are solved, and then $\alpha$1 to $\alpha$4 and $\beta$1 to $\beta$4 are calculated.
Accordingly, the angle θ at which BL(i) becomes the minimum is calculated. A position having an angle β is the darkest position, and a direction opposite there to by 180 degrees becomes the inclination direction of the scanner.
In the measurement method according to Figs. 36 and 37, the inclination of the scanner with respect to the vertical line of the map cannot be measured. Then, in connection with the measurement method shown in Figs. 33 to 34B, the inclination angle can be specifically measured.
Figs. 38A to 38C are explanatory views showing another embodiment of the search function of facilities and the like described with reference to Figs. 15A and 15B.

In this embodiment, if the user performs the grid drag operation, a designated range is determined on the basis of the trace, and a facility or the like designated by the user is searched in that range.

In Fig. 38A, A is a start point and B is an end point. If the user drags from A to B as arbitrary points in the map portion, the coordinate values of A and B are recognized, and a rectangle or a square having a diagonal AB becomes the designated range. After the grid drag operation is performed, if the icon of a desired facility, such as 'GS', 'ATM', and the like printed on the icon portion, is clicked, only the facilities within the designated range among the facilities are displayed.

In Fig. 38B, if the user drags from A to B as arbitrary points in the map portion, a circle having a radius AB becomes the designated range. Further, in Fig. 38C, if the user draws an arbitrary shape such that the start point and the end point are consistent with each other, the shape becomes the designated range.

Figs. 39A and 39B are explanatory views showing a method of displaying a section by the grid drag operation in the three-dimensional map.

Fig. 39A is a diagram showing an operation that is performed on the map by the user, and Fig. 39B is a diagram showing a screen that is displayed on the display (monitor) when the corresponding operation is performed. As shown in Fig. 39A, the user performs the grid drag operation with the start point A and the end point B. Then, as shown in Fig. 39B, a cross-sectional view taken along the line AB is displayed on the display (monitor). As described with reference to Figs. 23A and 23B, the map has the XY coordinates and the Z coordinate, and thus the cross-sectional view is easily generated on the basis of the Z coordinate with respect to the XY coordinates in the line AB.

<Printing of an electronic map>

Figs. 40A to 44B are diagrams illustrating the printing of an electronic map.

Fig. 40A is a diagram showing an electronic map. When the electronic map is printed, the map is output on a surface of a paper as shown in Fig. 40B. A dot pattern is superimposed and printed on this map.

When correlating the electronic map of Fig. 40A to the printed map of Fig. 40B, normally, entire longitude and latitude should be expressed as XY coordinates.

However, as shown in Fig. 41A, dot codes allocated to longitude and latitude are eight bits, thus it is impossible to express entire longitude and latitude; different longitude and latitude may be expressed by the same XY coordinates.

Therefore, a map number is placed on an upper left side of a paper, and a different map number is given for each map. In this way, while using the same XY coordinates, maps with different longitude and latitude can be printed.

Figs. 41A and 41B are diagrams illustrating a dot code format of a printed map.

Fig. 41A shows values defined by 32 bits of $C_0$ to $C_{31}$ of the dot pattern, by a table. Specifically, $C_0$ to $C_7$ represent Y coordinates, $C_8$ to $C_{15}$ represent X coordinates, $C_{16}$ to $C_{29}$ represent feature codes, and $C_{30}$ to $C_{31}$ represent parity bits.

Moreover, $C_{16}$ to $C_{29}$ are not limited to feature codes, and may represent other codes (code values).

Further, the dot codes are not limited to 32 bits, and may be expressed by other bit numbers.

Here, the feature codes refers to unique codes allocated for houses, buildings and the like on the ground, but is not limited to codes and may be substituted by longitude and latitude.

These feature codes and longitude and longitude may be freely set by the user. It should be noted that the same latitude and longitude cannot be used for different features.

When such an electrical map is released for users, if users apply feature codes each time they register their own features, code issuance procedure becomes cumbersome and management thereof becomes difficult.

Therefore, by substituting longitude and latitude of a position at which a user's own feature exists as a feature code, all users can freely register longitude and latitude as feature codes.

Fig. 41B is a table showing a correspondence between map numbers and X coordinates and Y coordinates.

The table is stored in a storage unit. For each map number, maximum and minimum values of X coordinates and Y coordinates are correlated and registered.

Figs. 42 to 44B are diagrams illustrating a scale size when printing an electronic map.

As shown in Fig. 42, an electronic map is displayed in a range surrounded by height M and width L. The maximum printing region on a paper is, as shown in Fig. 43A, the area surrounded by height K and width J.

As shown in Fig. 43B, when the ratio between height and width of the electronic map is equal to or smaller than the ratio between height and width of the maximum printing region, that is, when

$$\frac{K}{J} \geq \frac{M}{L},$$

the electronic map is scaled such that the width L of the electronic map becomes the width J of the paper. Therefore, the scale size ratio becomes

$$\frac{1}{J \times L}.$$

Meanwhile, as shown in Fig. 43C, when the ratio between height and width of the electronic map is larger than the ratio between height and width of the maximum printing region, that is, when

$$\frac{K}{J} < \frac{M}{L},$$

the electronic map is scaled such that the length M of the electronic map becomes the length K of the maximum printing region. Therefore, the scale size ratio becomes

$$\frac{1}{K \times M}.$$

Moreover, in this embodiment, as shown in Fig. 44, the user may also determine a scale size of a map and print an electronic map.

Fig. 45 is a flowchart illustrating the printing process of Figs. 42 to 44B.

First, whether printing mode is ON is determined (4501). If a user issues printing instruction by clicking a print icon (not shown) or other operations, an interruption signal for printing is generated. If the central processor unit (CPU) receives the signal, the printing mode becomes ON.

When the printing mode is determined as being ON, whether or not a paper size is selected is determined (4502). The user may select an arbitrary paper size from a plurality of paper sizes including A4, B5, and A3.

When the paper size is selected, whether or not a scale size is designated by the user is determined (4503).

If the scale size is designated, the scale size ratio designated by the user is selected (4504).

If the scale size is not designated, the central processing unit (CPU) compares the ratio between height and width of the electronic map with the ratio between height and width of the maximum printing region of the surface of paper (4505). When the ratio between height and width of the electronic map is equal to or smaller than the ratio between height and width of the maximum printing region, that is, when

$$\frac{K}{J} \geq \frac{M}{L},$$

the scale size ratio will become

$$\frac{1}{J \times L} \quad (4506).$$

Meanwhile, when the ratio between height and width of the electronic map is larger than the ratio between height and width of the maximum printing region, that is, when

$$\frac{K}{J} < \frac{M}{L},$$

the scale size ratio will become

$$\frac{1}{K \times M} \quad (4507).$$

Next, printing region is determined (4508). The central processing unit (CPU) determines the printing region according to the scale size determined by the process of steps 4505, 4506, or 4507.

Next, output process is performed (4509). The central processing unit (CPU) prints out a map, which is added a dot pattern, from a printing device and ends this printing process.

<Link between an electronic map and a dot pattern>

Figs. 46A to 47B are diagrams illustrating a link between an icon on an electronic map and an icon sticker.

Here, linking refers to correlating information of an icon on an electronic map to a dot pattern of an icon sticker. The information of the icon includes, if the icon indicates a restaurant, information such as a Web address of the restaurant and latitude and longitude at which the restaurant locates.

Link setting is managed by a table in the storage unit, shown in Fig. 47B.

To perform a linking process, a user clicks an icon to be linked using the mouse. Then, the central processing unit (CPU) refers the table shown in Fig. 47A, reads an address corresponding to a feature code of the clicked icon, and stores values of longitude and latitude indicating the position of the icon. Next, when the user clicks the icon sticker with the scanner, the central processing unit (CPU) correlates the address of the icon on the electronic map and map information, to a dot code of the dot pattern and registers them. Accordingly, linking process finishes.

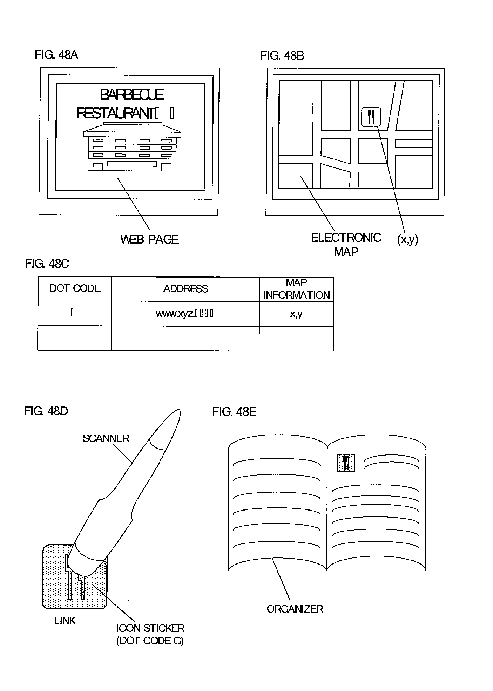

The icon sticker, with which the linking process has been performed, for example, may be used by attaching it on an organizer, as shown in Fig 48C. Further, such icon on which a dot pattern is printed is not limited to a sticker, and may be other forms such as a Post-it.

As shown in Figs. 48A to 48E, the user may register, in the table, an arbitrary Web address for an icon on the electronic map.

Figs. 49A to 49D are drawings illustrating an embodiment where an electronic map and an atlas on which a dot pattern is superimposed and printed are correlated and used.

A dot pattern has been superimposed and printed beforehand on the atlas. No feature information is written on the icon, etc.

The user may correlate only necessary icons from the icons indicated on the electronic map to the atlas, by attaching icon stickers where XY coordinates and feature information are linked on the atlas.

Figs. 50 to 51 are flow charts used to explain procedures that correlate an electronic map and atlas.

First, whether or not an icon on the electronic map is clicked by a user is determined (5001). When the user place the cursor on the icon on the electronic map and clicks with the mouse, an interruption signal reporting the fact that the icon was clicked is transmitted to the central unit processor (CPU) of the computer. If it determines that the signal was received, the central processing unit (CPU) shifts the processing to step 5002.

Next, longitude and latitude (x, y) are calculated (5002). The central processing unit (CPU) calculates longitude and latitude of the clicked icon. After that, the central processing unit (CPU) retrieves feature information such as a Web address registered with the icon (5003).

Then, whether or not an atlas is clicked by the user is determined (5004). As shown in Fig. 49B, if the user clicks the atlas with the scanner, the scanner reads out a dot pattern superimposed and printed on the atlas. The central processing unit (CPU) of the scanner analyzes the dot pattern using analysis software and converts to a dot code (code information). This dot code is transmitted to the central processing unit (CPU) of the computer. The atlas is determined as having been clicked upon the transmission of the dot code.

Next, the central processing unit (CPU) of the computer calculates to convert XY coordinate information in the transmitted dot code into longitude and latitude (x', y') (5005).

After that, whether or not the longitude and latitude calculated in 5002 and those in 5005 are almost the same is determined (5006). Percentage of a margin to determine whether they are almost the same in this process should be stored in advance in the storage unit. If they are determined as being almost the same, the process is shifted to 5101. If they are determined as not being the same, the process of 5004 is performed again.

Next, a position registration process is performed (5101). The central processing unit (CPU) correlates and registers the longitude and latitude of the electronic map and the XY coordinates of the atlas in the storage unit.

Following this process, the central processing unit (CPU) determines whether or not a sticker is attached (5102). If the central processing unit (CPU) recognizes the sticker being attached and clicked (5103), it determines whether or not the dot pattern read from the sticker is almost the same as the XY coordinates registered in the above process (5104). If they match, a linking process (5105), such as accessing a corresponding address (URL) registered in the table, is performed.

Figs. 52A and 52B are diagrams illustrating an operation of scrolling an electronic map by the grid tilt operation. Here, the grid tilt operation, as described in Figs. 18A to 18C and Figs 20A to 20C, is generated by inclining the scanner. The inclination direction is recognized by the difference in brightness in an imaging field, then predetermined operation is performed.

For example, if the scanner is inclined towards the direction of (1) of Fig. 52A (right direction on the paper), the electronic map is scrolled in an upper right direction of the screen as shown in (1) of the Fig. 52B. If the scanner is inclined towards the direction of (2) of Fig. 52A (left direction on the paper), the electronic map is scrolled in a lower left direction of the screen as shown in (2) of the Fig. 52B. If the scanner is inclined towards the direction of (3) of Fig. 52A (upper right direction on the paper), the electronic map is scrolled in an upper right direction of the screen as shown in (3) of the Fig. 52B.

Figs. 53A to 54B are diagrams illustrating the operation of enlarging and reducing the electronic map by the grid grind operation.

The grid grind operation is as explained in Fig. 21A and 21B.

In Figs. 53A and 53B, rotating the posterior end of the scanner in right direction (clockwise direction) will gradually zoom in the electronic map displayed on the display monitor (Figs. 53A and 53B). Rotating the posterior end of the scanner in left direction (counterclockwise direction) will gradually zoom out the electronic map displayed on the display monitor (Figs. 54A and 54B).

Figs. 55A and 55B are diagrams illustrating an operation of switching a mode by the grid tapping operation.

The grid tapping operation is a scanner operation described in Fig 17A. That is, the grid tapping is an operation of standing the scanner in a direction perpendicular to a map and hitting against the map by moving the scanner up and down. In the map of this embodiment, as shown in Fig. 55A, three kinds of modes (a map mode, information mode and aerial photo mode) may be switched by the grid tapping operation.

<Feature information>

Figs. 56A and 56B are diagrams illustrating an operation of displaying feature information on a monitor.

As shown in these diagrams, maps and feature symbols (e. g. , icon) are printed in the atlas. A dot pattern is superimposed and printed on such prints.

When a feature symbol (icon) is imaged by the scanner, the dot pattern on such feature symbol (icon) is read out by the scanner and converted into a dot code. Then, feature information corresponding to the dot code is displayed on the display (monitor) (Fig. 56B).

Fig. 57 is an explanatory view showing a case in which longitude and latitude where a representative point on a map is located are used as an attribute code.

That is, the map is divided into a plurality of divided regions, and the representative point is set in each divided region (here, 10 m x 10 m region).

That is, in the divided region, the longitude and latitude where the representative point is located are used as an attribute code of the region.

Fig. 58 is an example of a relational table that correlates this attribute code to the representative point and an address (URL, etc.).

As such, using the longitude and latitude of the representative point as an attribute code of the divided region will enable to assign the same attribute code for predetermined divided region (e.g., a city, a ward, a town, a village, or other administrative areas).

Further, the use of attribute codes is not limited to longitude and latitude of representative points, but may be longitude and latitude of a centroid of a divided region.

Feature codes enable identification of a company or a home on a map. However, feature codes may not be issued by individuals, as issuance of feature codes requires a management system of enormous scale.

However, if longitude and latitude can be used as a feature code, identification of the position becomes extremely easy. Accordingly, in this embodiment, longitude and latitude are used as a feature code.

Fig. 60 is an example of a case in which a paper medium where a map and a dot pattern are superimposed and printed is read by the scanner, and a feature icon is displayed on the electronic map.

When a map medium where XY coordinates and feature information codes are printed as a dot pattern is read by the scanner, the feature information codes and XY coordinates are retrieved in the personal computer.

The central processing unit (CPU) of the personal computer refers to a feature information code table in a storage unit, and reads multimedia information including images, motion pictures, text information, corresponding to the feature information code. The central processing unit (CPU), then, outputs the information from a display screen or a speaker.

Meanwhile, in this table, longitude and latitude as a representative point of the feature are correlated with the feature information code and the address. For example, if the feature extends to a certain range of XY coordinates, the latitude and longitude of the representative point of the feature are used. As such, using a concept of a representative point of a feature facilitates calculations of, for example, a distance from the station to the feature.

Further, XY coordinates read out with the feature information codes are converted into longitude and latitude based on a predetermined conversion algorithm. As a result, an electronic map is displayed.

(Map mode)

The map mode and the information mode may be switched by reading an icon (dot pattern) previously printed on a paper medium.

When XY coordinates are read in the map mode, the XY coordinates are converted into longitude and latitude according to a predetermined conversion algorithm. An electronic map having the longitude and latitude in its center is displayed.

Moreover, if the display monitor of the personal computer displays divided windows, and multimedia information including images, motion pictures, and text information can be displayed in addition to an electronic map, the multimedia information stored in addresses corresponding to the feature information codes read simultaneously with XY coordinates is output.

(Information mode)

When feature information codes are read in the information mode, multimedia information is retrieved from addresses corresponding to the feature information codes.

Further, when calculating a distance from the feature to a station or other values, longitude and latitude as a representative point of the feature is retrieved and the calculation is performed by treating these longitude and latitude as the longitude and latitude of the feature.

Moreover, when the feature information code is read either in the map mode or the information mode, the longitude and latitude as the representative point of the feature correlated to the feature information code can be used to display or to calculate a distance, etc.

<Scrolling an electronic map>

Figs. 61A, 61B, and 62 are diagrams illustrating a method of scrolling an electronic map.

As shown in Fig. 61A, if a user consecutively taps an arbitrary position on a map (paper medium) two or more times using the scanner and then slides the scanner on the map, as shown in Fig. 61B, the electronic map (map displayed on a monitor) is scrolled in a direction in which the scanner was slid.

Here, grid tilt refers to an operation where the scanner is inclined backward and forward. A certain position on the map can be specified by this operation. Also, a repeated tapping operation may be used to specify a position on the map. In short, the grid tilt and the repeated tapping operation cause the central processing unit (CPU) to recognize a dot pattern on a map (surface of a medium) twice or more by moving the scanner on the map.

That is, by consecutively recognizing the dot pattern on the surface of the medium twice or more, XY coordinates ($a_1$, $a_2$ in Fig. 62) are captured upon imaging. After that, by sliding the imaging unit on the surface of the medium, the moving direction and displacement are determined and displayed on a display screen, on the basis of the amount of difference (($b_1 = f_1(a_1,\Delta x)$, $b_2 = f_2(a_2, \Delta y)$)) from the XY coordinates ($b_1$, $b_2$) when the scanner is separated from the map.

As shown in Fig. 62, the amount of difference in XY directions read by the scanner is taken to be converted into longitude and latitude. Consequently, the displacement is expressed by longitude and latitude.

Further, in a case of the tapping operation, a central processing unit (CPU) program may recognize the scanner's grid tapping operation on the basis of the difference in brightness of reflected light consecutively from the surface of the map (surface of a medium).

In this manner, the recognition of tapping operation is not necessarily done by having the scanner first read the dot pattern (coordinate value). The fact that the scanner taps on a surface of a map (surface of a medium) may also be recognized by the difference of brightness of reflected light consecutively from the surface of the map (surface of the medium). Moreover, when the tapping operation ends, the scanner stops on the surface of the map (surface of the medium), a dot pattern of the surface of the map (surface of the medium) may be read as a coordinate value or a code value.

Figs. 63A to 63C are diagrams illustrating procedures that correlate a dot pattern printed on a medium to longitude and latitude.

A user may correlate and register a dot pattern and longitude and latitude of an electrical map.

Specifically, the user moves the cursor of the mouse to a position (a, b) (a represents latitude and b, longitude) on the electronic map, as shown in Fig. 63A, and clicks using the mouse. Next, the user clicks a sticker as shown in Fig.

63B. As a result, latitude a, longitude b, and the dot code of the sticker are correlated and registered as a table shown in Fig. 63C. In this way, when the user clicks the sticker, (a, b) is displayed at the center of the electronic map.

Moreover, a medium where a dot pattern is printed may not be limited to a sticker and may be other medium including an icon and a bookmark.

Fig. 64 is an example when an electronic map and feature information are displayed on the same monitor.

Figs. 65A to 65C are diagrams illustrating the case using different and identifiable inks-ink used for printing an electronic map and ink for printing a dot pattern.

Fig. 65A illustrates the case using two types of ink with different frequency characteristics. Ink A and ink B have different frequency characteristics. For example, color content ratios at frequency $\alpha$ are different between ink A and B. Therefore, a dot pattern, map, and icon are identified by analyzing the color of the medium on which the dot pattern, map and icon are superimposed and printed.

Fig. 65B illustrates the case where two types of ink are identified by whether light at an arbitrary frequency is absorbed or reflected. For example, as shown in the diagram, ink A reflects and ink B absorbs light at frequency $\beta$. A dot pattern, map, and icon can be identified using ink B for printing of the dot pattern and ink A for printing of the map and icon.

Further, ink absorbs light at an arbitrary frequency includes ink with high rate of absorption of light at the arbitrary frequency, and ink reflects light at an arbitrary frequency, includes ink with high rate of reflection of light at the arbitrary frequency.

Fig. 65C illustrates the case where, in the case of Fig. 65B, ink B is invisible ink. That is, since ink B is invisible in a visible light region, a user hardly recognizes the dot pattern.

In this way, security of a dot pattern may be enhanced or a variety such as printing different information according to light absorption characteristics may be obtained using inks with different characteristics for ink for printing a map and for ink for printing a dot pattern, in other words, using inks with different and identifiable light absorption and reflection characteristics upon imaging by a scanner, etc.

**Claims**

1. A print output control unit configured to:

   display on a display device information of an electronic map defined by latitude and longitude downloaded from a server via a network or read from a storage medium;
   convert the latitude and longitude which indicate a location in the information of the electronic map into XY coordinate values in accordance with a predetermined scale size;
   store the latitude and longitude and the XY coordinate values by correlating the same in a storage unit; and
   superimpose and print a dot pattern where the XY coordinate values are patterned as a dot code, according to the scale size, on a medium on which the electronic map is printed.

2. The print output control unit according to claim 1, wherein, in a region other than a map region on which the dot pattern where the XY coordinate values are patterned as the dot code is superimposed and printed, a map number region on which a dot pattern where latitude and longitude information correlated with XY coordinates of the map region is patterned as a dot code is printed is printed.

3. The print output control unit according to claim 1 or 2, wherein the latitude and longitude at a center of map information are printed as a dot pattern in the map number region.

4. The print output control unit according to any one of claims 1 to 3, wherein the map also has scale size information printed as a dot pattern.

5. The print output control unit according to claim 1 further configured to;
   store latitude and longitude of a center of the electronic map and the scale size as a dot code in the storage unit in order to display on a display the information of the electronic map from a captured image downloaded from the server via the network or read from the storage unit; and
   superimpose and print the dot pattern where the dot code is repeatedly patterned on a map icon printed on a surface of the medium in order to guide an imaging by the imaging unit.

6. The print output control unit according to any one of claims 1 to 5, further configured to:

store an address where feature information existing as a symbol of the information of the electrical map is registered in relation with latitude and longitude which indicate a location of the address in the storage unit;
store a code which identifies the symbol from a captured image or a feature information code defined by the longitude and
latitude as a dot code in the storage unit; and
superimpose and print a dot pattern where the dot code as well as the XY coordinate values are repeatedly patterned on the symbol of the information of the electrical map to be printed.

7. The print output control unit according to any one of claims 1 to 5 further configured to:

store an address where attribute information of a divided region of the electronic map is registered, in relation with an attribute code, which indicates an attribute of the address, and latitude and longitude, which indicate a location of a representative point within the divided region, in the storage unit;
store a code which identifies the divided region from a captured image or the attribute code defined by the latitude and longitude as a dot code in the storage unit; and
superimpose and print a dot pattern where the dot code as well as the XY coordinate values are repeatedly patterned within the divided region of the electronic map to be printed.

8. The print output control unit according to claim 7, wherein the location of the representative point within the divided region is latitude and longitude calculated from a centroid of the divided region.

9. The print output control unit according to any one of claims 1 to 8, wherein different and identifiable inks are used for ink for printing the electronic map and for ink for printing the dot pattern.

10. The print output control unit according to claim 9, wherein the different and identifiable inks are at least two inks that have different frequency characteristics to identify the dot pattern from other printings.

11. The print output control unit according to claim 9, wherein the different and identifiable inks are ink that absorbs light at an arbitral frequency and ink that reflects the light at an arbitral frequency to identify the dot pattern from other printings.

12. The print output control unit according to claim 9, wherein at least one of the different and identifiable inks is invisible ink and has light absorption characteristics to identify the dot pattern from other printings.

FIG. 1

FIG. 2

SCANNER

MAP

ADDRESS OF ELECTRONIC MAP IS REGISTERED ON MAP MODE ICON AND CORRESPONDING ELECTRONIC MAP IS DOWNLOADED AND DISPLAYED BY CLICKING MAP MODE ICON

FIG. 3

NW

BUS

NWI/ F

DISP

KBD

CPU

MM

HD

PROGRAM
APPLICATION

DATA

OS

USB I/F

SCANNER

FIG. 4

FIG. 5

**FIG. 10A**

PLANAR MAP FORMAT

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_{9}$ | $C_{8}$ | $C_{7}$ | $C_{6}$ | $C_{5}$ | $C_{4}$ | $C_{3}$ | $C_{2}$ | $C_{1}$ | $C_{0}$ |
|---|---|---|---|---|---|---|---|---|---|---|---|---|---|---|---|---|---|---|---|---|---|---|---|---|---|---|---|---|---|---|---|
| 0 | PARITY | | | MAP NUMBER | | | | | | | | | | | | | Y COODINATE | | | | | | | X COORDINATE | | | | | | | |

XY MAP DATA

**FIG. 10B**

| $C_1 C_0$ | $C_9 C_8$ | $C_{17} C_{16}$ | $C_{25} C_{24}$ |
| $C_3 C_2$ | $C_{11} C_{10}$ | $C_{19} C_{18}$ | $C_{27} C_{26}$ |
| $C_5 C_4$ | $C_{13} C_{12}$ | $C_{21} C_{20}$ | $C_{29} C_{28}$ |
| $C_7 C_6$ | $C_{15} C_{14}$ | $C_{23} C_{22}$ | $C_{31} C_{30}$ |

FIG. 6

(a)

(b)

FIG. 7

FIG. 8

|       (a)       |       (b)       |       (c)       |
| :------------: | :------------: | :------------: |
|    00100001    |    01100110    |    11010101    |

FIG. 9

(a)

| $I_3$ | $I_4$ | $I_5$ |
| :---: | :---: | :---: |
| $I_2$ | $I_1$ | $I_6$ |

2× 3

(b)

| $I_3$ | $I_4$ | $I_5$ |
| :---: | :---: | :---: |
| $I_2$ | $I_1$ | $I_6$ |
| $I_9$ | $I_8$ | $I_7$ |

3× 3

(c)

| $I_5$ | $I_6$ | $I_7$ |
| :---: | :---: | :---: |
| $I_4$ | $I_1$ | $I_8$ |
| $I_3$ | $I_2$ | $I_9$ |
| $I_{12}$ | $I_{11}$ | $I_{10}$ |

3× 4

(d)

| $I_{36}$ | $I_{17}$ | $I_{18}$ | $I_{19}$ | $I_{20}$ | $I_{21}$ |
| :---: | :---: | :---: | :---: | :---: | :---: |
| $I_{35}$ | $I_{16}$ | $I_5$ | $I_6$ | $I_7$ | $I_{22}$ |
| $I_{34}$ | $I_{15}$ | $I_4$ | $I_1$ | $I_8$ | $I_{23}$ |
| $I_{33}$ | $I_{14}$ | $I_3$ | $I_2$ | $I_9$ | $I_{24}$ |
| $I_{32}$ | $I_{13}$ | $I_{12}$ | $I_{11}$ | $I_{10}$ | $I_{25}$ |
| $I_{31}$ | $I_{30}$ | $I_{29}$ | $I_{28}$ | $I_{27}$ | $I_{26}$ |

6× 6

FIG.11A

ENLARGE OR REDUCE BY USING PAPAR ICON

MAP

MOVE MAP

UP

LEFT | RETURN | RIGHT

DOWN

CHANGE SIZE OF MAP

ENL-ARGE

NORMAL

RED-UCE

FIG.11B

MONITOR

GS

GS

GS

EP 2 058 779 A1

**FIG. 12A**

SCROLL BY USING PAPER ICON

MOVE MAP

UP

LEFT RETURN RIGHT

DOWN

CHANGE SIZE OF MAP

ENL-ARGE    NORMAL    RED-UCE

**FIG. 12B**

MONITOR

GS

31

FIG. 13A

SCROLL (X,Y COORDINATES)

— MAP

ACCORDING TO
ANOTHER EMBODIMENT,
WHEN CLICKING ICON,
XY COORDINATES AT
CORRESPONDING
POSITION ARE READ
OUT AND MOVEMENT TO
CENTER OF SCREEN IS
MADE

GS

FIG. 13B

MONITOR

GS

CENTER OF SCREEN

GS

FIG. 14A

GRID DRAG

MAP

FIG. 14B

MONITOR

CENTER OF MONITOR

FIG. 15A

MAPPING

MAP

HIGHLIGHT MAP

( INFOR-MATION ) ( MAP ) ( GS ) ( ATM ) ( ACCOM-MODATION ) ( PLACES TO EAT ) ( CANCEL )

FIG. 15B

MONITOR

GS

GS

GS

GS

FIG. 16A

(1)

(2)

INFOR
MATION

MAP

GS

MAP

IF INFORMATION MODE IS
CLICKED AND SYMBOL OF TEMPLE
IS CLICKED,TEMPLE IS DESCRIBED
IN MULTIMEDIA MANNER

FIG. 16B

MONITOR

FIG. 17A

| METHOD OF SWITCHING MAP MODE TO INFORMATION MODE |

CLICK ICON TWICE = GRID TAPPING

SCANNER

GS

MAP

FIG. 17B

SLIDE TO SURROUND ICON = GRID SLIDING

SCANNER

GS

MAP

FIG. 17C

SLIDE RAPIDLY UPPER PORTION OF ICON = GRID SCRATCH

SCANNER

GS

MAP

FIG. 18A

SCROLL BY DIRECTION OF PEN

MAP

DIRECTION OF PEN

卍    GS

FIG. 18B

(2)    (1)    (4)

(3)    (5)

DIRECTION OF PEN

FIG. 18C

卍    GS

卍    GS

(3)

卍    GS

(2)    (4)

(1)    GS

(5)

卍    GS

FIG. 19A

DIRECTION TO WHICH   DIRECTION OF

MAP

FIG. 19B

(1)

(2)

PEN

(3)

MAP

FIG. 19C

(3)

G

(2)

GS

(1)

G

EP 2 058 779 A1

FIG. 20A

DIRECTION OF CAMERA
DIRECTION OF DOT
α

FIG. 20B

INCLINATION OF PEN
DIRECTION OF CAMERA
β

(c)

γ

γ = α + β

39

FIG. 21A

GRID GRIND RIGHT

MAP

PEN

ROTATE PEN IN RIGHT
DIRECTION→ ENLARGE
(DETAILED)

GS

FIG. 21B

MONITOR

GS

FIG. 22A

GRID GRIND LEFT

MAP

PEN

ROTATE PEN IN LEFT
DIRECTION→ REDUCE
(BROAD)

GS

FIG. 22B

GS

TOPOGRAPHICAL MAP FORMAT

FIG. 23A

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| 1 | PARITY | | | MAP NUMBER | | | | Z COORDINATE | | | | | | | | Y COORDINATE | | | | | | | | X COORDINATE | | | | | | | |

X,Y,Z MAP DATA

FIG. 23B

| $C_1 C_0$ | $C_9 C_8$ | $C_{17}C_{16}$ | $C_{25}C_{24}$ |
|---|---|---|---|
| $C_3 C_2$ | $C_{11}C_{10}$ | $C_{19}C_{18}$ | $C_{27}C_{26}$ |
| $C_5 C_4$ | $C_{13}C_{12}$ | $C_{21}C_{20}$ | $C_{29}C_{28}$ |
| $C_7 C_6$ | $C_{15}C_{14}$ | $C_{23}C_{22}$ | $C_{31}C_{30}$ |

42

FIG. 24A

GRID GRIND

FIG. 24B

(1) COUNTERCLOCKWISE ROTATION

GRID GRIND LEFT

(2) CLOCKWISE ROTATION

GRID GRIND RIGHT

FIG. 24C

(1)

(2)

VIEW POINT CHANGES
ACCORDING TO ROTATION
DIRECTION OF PEN

$h_1$

$z$

GROUND

$z$=HEIGHT ON CORRESPONDING
SPOT
$h_1$=NORMAL (VIEW POINT OF
HUMAN BEING)
(1) VIEW POINT RISES FROM
NORMAL
(2) RISEN VIEW POINT FALLS

FIG. 25

VIEWPOINT OPERATION (TILT UP, DOWN )

EP 2 058 779 A1

FIG. 26A

(1)NORMAL

FIG. 26B

(2)TILT PEN IN
FRONT
DIRECTION→
TILT DOWN

FIG. 26C

TILT PEN IN
BACK
DIRECTION→
TILT UP

45

**FIG. 27A**

VIEWPOINT OPERATION (ANGLE)

(1)

(2)  (3)

MAP

DIRECTION OF PEN

**FIG. 27B**

(1)STAND PERPENDICULAR TO MAP

MONITOR

FIG. 28A

(2 )TILT PEN LEFT

FIG. 28B

(3 )TILT PEN RIGHT

FIG. 29A

GRID PUMP

(1)　(2)

DIRECTION OF PEN

MAP

FIG. 29B

NORMAL

FIG. 30A

( 1 )REPEATEDLY AND RAPIDLY TILT PEN FORWARD→ ZOOM IN

FIG. 30B

(2 )REPEATEDLY AND RAPIDLY TILT PEN BACKWARD→ ZOOM OUT

FIG. 31A

VIEW POINT OPERATION SET

TAP PEN VERTICALLY SO AS
TO ADJUST ALTITUDE AND
LENS TO STANDARD

TAP PEN VERTICALLY
= GRID TAPPING

RETURN FROM HIGH ALTITUDE
ZOOM OUT TO NORMAL

FIG. 31B

HIGH ALTITUDE
ZOOM OUT

FIG. 31C

NORMAL

FIG. 32A

SCANNER

RUBBER

FIG. 32B

SCANNER

SPRING

FIG. 33

INCLINED DIRECTION/ANGLE MEASUREMENT METHOD (1)

BL0(i)
i=1,n(=48)

INCLINED DIRECTION/ ANGLE MEASUREMENT METHOD ( 2 )

FIG. 34A

45°    45°

FIG. 34B

FIG. 35

INCLINED DIRECTION MEASUREMENT METHOD

MEASUREMENT POINT

POINTS 1 TO 8 BECOME
MEASUREMENT POINTS

FIG. 36

MEASUREMENT METHOD ACCORDING

$\alpha_1 \sin(\theta - \beta_1)$

$$BL(i) = \sum_{j=1}^{\frac{n}{2}} \alpha_j \left\{ \sin\left(\frac{1}{2}\right)^{j-1} (\theta - \beta_j) \right\}$$

n=2m (WHERE n IS THE NUMBER OF MEASUREMENT POINTS)

AS SHOWN IN FIG. 35, WHEN THE NUMBER OF MEASUREMENT POINTS IS 8, n BECOMES 8 AND FACTORS OF FOURIER FUNCTION $\alpha$ (i) ,$\beta$ (i), i= 1 AND 4 CAN BE ACQUIRED SUCH THAT BRIGHTNESS OF RADIUS FROM CENTER OF ANALYSIS IS DISPLAYED BY SUM OF FOUR SIGN FUNCTIONS. SPOT WHERE BL(i) HAS MINIMUM VALUE IS THE DARKEST PLACE AND OPPOSITE.

**FIG. 37**

MEASUREMENT METHOD ACCORDING
TO EQUATION OF n-TH DEGREE

$$BL(i) = \alpha_1(\theta - \beta_1) \cdot \alpha_2(\theta - \beta_2) \cdots \alpha_i(\theta - \beta_i)$$
WHERE $\dfrac{1}{1}\pi/2$ AND $n=2m$
$\alpha_i, \beta_i$ CAN BE ACQUIRED BY SOLVING THE ABOVE EQUATION

IN CASE OF FIG. 36, SINCE THE NUMBER OF MEASUREMENT POINTS IS 8, FOUR EQUATIONS SHOLD BE SOLVED. BRIGHTNESS ACQUIRING $\alpha_i$, $\beta_i$, i=1 AND 4. SPOT WHERE BL(i) HAS THE MINIMUM VALUE IS THE DARKEST PLACE AND OPPOSITE DIRECTION THEREOF IS DIRECTION TO WHICH PEN IS TILTED.

FIG. 38A

MAPPING ACCORDING TO GRID DRAG

B

GS

A

FIG. 38B

B

GS

A

GS

FIG. 38C

A

GS

B

GS

FIG. 39A

B

MAP

A

| WHEN GRID DRAG IS PERFORMED, CROSS-SECTION IS DISPLAYED ON MONITOR |
| --- |

FIG. 39B

MONITOR

PRINTING ELECTRONIC MAP

FIG. 40A

ELECTRONIC MAP

MONITOR

FIG. 40B

MAP NUMBER

PAPER SURFACE

EP 2 058 779 A1

FIG. 41A

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | | FEATURE CODE | | | | | | | | | | | | | | X COORDINATE | | | | | | | | Y COODINATE | | | | | | | |

DOT CODE DOES NOT NECESSARILY CONSIST OF 32 BITS

FIG. 41B

| MAP NUMBER | X COORDINATE | | Y COORDINATE | |
|---|---|---|---|---|
| | Min | Max | Min | Max |
| 1 | | | | |
| 2 | | | | |
| 3 | | | | |
| | | | | |
| | | | | |
| | | | | |

60

FIG. 42

FIG. 43A

PAPER

J

MAXIMUM
PRINTING REGION

K

FIG. 43B

$\dfrac{K}{J}$⫺ $\dfrac{M}{L}$    SCALE SIZE $\dfrac{1}{J \bullet L}$

MAP PRINTING

FIG. 43C

$\dfrac{K}{J}$‹ $\dfrac{M}{L}$    SCALE SIZE $\dfrac{1}{K \bullet M}$

MAP
PRINTING

FIG. 44A

DETERMINING SCALE SIZE 〔 SCALE SIZE RATIO〔 $\frac{1}{Q}$ 〕

$(x_2,y_2)$

PRINTING
REGION

$(x_1,y_1)$

CENTER

PAPER

FIG. 44B

$$x_1 = \frac{{}_e x_1}{Q} \qquad x_2 = \frac{{}_e x_2}{Q}$$

$$y_1 = \frac{{}_e y_1}{Q} \qquad y_2 = \frac{{}_e y_2}{Q}$$

FIG. 45

PRINT PROCESS

4501
PRINTING MODE ON?

4502
PAPER SIZE SELECTED?

4503
SCALE SIZE SPECIFIED?

4505
$\frac{K}{J}$  $\frac{M}{L}$

4504
SCALE SIZE DETERMINED

4506
SCALE SIZE: $\frac{1}{J \cdot L}$

4507
SCALE SIZE: $\frac{1}{K \cdot M}$

4508
PRINTING REGION DETERMINED

4509
OUTPUT PROCESS

END

FIG. 46A

ELECTRONIC MAP

MONITOR

FIG. 46B

SCANNER

ICON
STICKER

LINK

FIG. 46C

ICON STICKER

ORGANIZER

FIG. 47A

| FEATURE CODE | ADDRESS |
|---|---|
| ⬚ | www.abc.⬚⬚⬚⬚ |
| ⬚ | www.def.⬚⬚⬚⬚ |
| ⬚ | www.ghi.⬚⬚⬚⬚ |
| | |
| | |
| | |

FIG. 47B

| DOT CODE | ADDRESS | MAP INFORMATION |
|---|---|---|
| ⬚ | www.abc.⬚⬚⬚⬚ | x,y |
| ⬚ | www.def.⬚⬚⬚⬚ | |
| ⬚ | www.ghi.⬚⬚⬚⬚ | |
| | | |
| | | |
| | | |

FIG. 48A

BARBECUE
RESTAURANT▯ ▯

WEB PAGE

FIG. 48B

ELECTRONIC    (x,y)
MAP

FIG. 48C

| DOT CODE | ADDRESS | MAP INFORMATION |
|---|---|---|
| ▯ | www.xyz.▯▯▯▯ | x,y |
| | | |

FIG. 48D

SCANNER

LINK

ICON STICKER
(DOT CODE G)

FIG. 48E

ORGANIZER

FIG. 49A

ELECTRONIC MAP

MONITOR

(x,y)

FIG. 49B

(x',y')

SCANNER

ATLAS

REGISTRATION IS OK WHEN

FIG. 49C

ICON STICKER

FIG. 49D

FIG. 50

REGISTRATION
PROCESS

5001

ICON ON
ELECTRONIC MAP
CLICKED?

□ □

□ □ □ 5002

LONGITUDE AND
LATITUDE
CALCULATION

5003

READ FEATURE
INFORMATION

5004

□ □     MAP CLICKED?

□ □ □ 5005

X' , Y'  COORDINATE
CALCULATION

5006

□' □ □
AND     □ □
□' □ □□

□ □ □

B

FIG. 51

FIG. 52A

SCANNER

ATLAS

FIG. 52B

ELECTRONIC
MAP

FIG. 53A

SCANNER

RIGHT HAND TURNING
→ ZOOM IN

ATLAS

FIG. 53B

ELECTRONIC
MAP

FIG. 54A

SCANNER

LEFT HAND TURNING
→ ZOOM OUT

ATLAS

FIG. 54B

ELECTRONIC
MAP

FIG. 55A

FIG. 55B

MODE IS CHANGED WHEN TOUCHED TWICE WITHIN A SECOND

SCANNER

ATLAS

FIG. 56A

SCANNER

ATLAS

FIG. 56B

MONITOR

FIG. 57

REPRESENTATIVE
POINT

10□

10□

DIVIDED
REGION

LONGITUDE AND LATITUDE WHERE REPRESENTATIVE
POINT IS LOCATED ARE USED AS ATTRIBUTE CODE

FIG. 58    RELATION TABLE BETWEEN ATTRIBUTE CODE,
REPRESENTATIVE POINT, AND ADDRESS

| ATTRIBUTE CODE | REPRESENTATIVE POINT | | ADDRESS |
|---|---|---|---|
| | LATITUDE | LONGI-TUDE | |
| Ц | | | |
| B | | | |

FIG. 59

CENTROID

DIVIDED
REGION

LATITUDE AND LONGITUDE OF CENTROID OF DIVIDED
REGION ARE USED AS ATTRIBUTE CODE

FIG. 60

FIG. 61A

PAPER

SCANNER

FIG. 61B

MONITOR

ELECTRONIC
MAP

FIG. 62

MONITOR

ELECTRONIC MAP

$(b_1,b_2)$

$b_2=f_2(a_2,\Delta \mathbb{I})$

$(a_1,a_2)$

$b_1=f_1(a_1,\Delta x)$

FIG. 63A

ELECTRONIC MAP

MONITOR

(a,b)

FIG. 63B

SCANNER

STICKER

DOT CODE 53001

FIG. 63C

| DOT CODE | LATI-TUDE | LONGI-TUDE |
|----------|-----------|------------|
| 53001 | a | b |
|  |  |  |

WHEN STICKER IS CLICKED, MAP CENTERING (a, b) IS DISPLAYED ON MONITOR

FIG. 64

ELECTRONIC MAP          FEATURE INFORMATION

MONITOR

FIG. 65A

IDENTIFYING BY FREQUENCY CHARACTERISTICS

FIG. 65B    IDENTIFYING WHETHER LIGHT AT ARBITRARY
FREQUENCY IS ABSORBED OR REFLECTED

FIG. 65C

PRINTING DOTS USING INVISIBLE INK AS LIGHT-ABSORBING INK

**INTERNATIONAL SEARCH REPORT**

| International application No. |
|---|
| PCT/JP2007/066709 |

A. CLASSIFICATION OF SUBJECT MATTER
*G09B29/10*(2006.01)i, *G06F3/042*(2006.01)i, *G06F3/12*(2006.01)i, *G09B29/00*
(2006.01)i, *G09B29/02*(2006.01)i

According to International Patent Classification (IPC) or to both national classification and IPC

B. FIELDS SEARCHED

Minimum documentation searched (classification system followed by classification symbols)
G09B29/10, G06F3/042, G06F3/12, G09B29/00, G09B29/02

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2004-294942 A (Hitachi, Ltd.),<br>21 October, 2004 (21.10.04),<br>Par. Nos. [0011] to [0014]; Figs. 1 to 3<br>(Family: none) | 1<br>2-5,9-12<br>6-8 |
| Y<br>A | JP 2004-46424 A (Dainippon Printing Co., Ltd.),<br>12 February, 2004 (12.02.04),<br>Par. Nos. [0045] to [0090]; Figs. 8 to 14<br>(Family: none) | 2-4,9-12<br>6-8 |
| Y<br>A | JP 2006-3791 A (Hitachi, Ltd.),<br>05 January, 2006 (05.01.06),<br>Par. Nos. [0013] to [0035]; Figs. 1 to 8<br>(Family: none) | 5,9-12<br>6-8 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>18 December, 2007 (18.12.07) | Date of mailing of the international search report<br>08 January, 2008 (08.01.08) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

| International application No. |
| --- |
| PCT/JP2007/066709 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2003-287432 A  (Kokuyo Co., Ltd.),<br>10 October, 2003 (10.10.03),<br>Par. Nos. [0035] to [0037]<br>(Family: none) | 9-12<br>6-8 |
| A | JP 2004-138823 A  (Dainippon Printing Co., Ltd.),<br>13 May, 2004 (13.05.04),<br>Full text; all drawings<br>(Family: none) | 1-12 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6103498 A
- JP 2004054465 A

- JP H6103498 B